# EUROPEAN PATENT APPLICATION

(11) **EP 4 764 374 A1**
(43) Date of publication of application: **24.06.2026**
(21) Application number: 24853849.8
(22) Date of filing: 15.08.2024
(51) Int. Cl.: F25D 25/02, F25D 23/00, F25D 11/02

(54) **FRESH-KEEPING STORAGE CONTAINER AND REFRIGERATOR**

(30) Priority: 15.08.2023 CN 202311027595; 15.08.2023 CN 202311027512; 15.08.2023 CN 202311027603
(71) Applicant: QINGDAO HAIER REFRIGERATOR CO., LTD., Qingdao, Shandong 266101 (CN); Qingdao Haier Smart Technology R&D Co., Ltd., Qingdao, Shandong 266101 (CN); HAIER SMART HOME CO., LTD., Qingdao, Shandong 266101 (CN)
(72) Inventor: LI, Mengcheng, Qingdao, Shandong 266101 (CN); LIU, Huihui, Qingdao, Shandong 266101 (CN); YI, Yao, Qingdao, Shandong 266101 (CN); LIU, Haoquan, Qingdao, Shandong 266101 (CN); ZHANG, Yuning, Qingdao, Shandong 266101 (CN); FEI, Bin, Qingdao, Shandong 266101 (CN); LIU, Yang, Qingdao, Shandong 266101 (CN); ZHANG, Peng, Qingdao, Shandong 266101 (CN)
(74) Representative: Winter, Brandl - Partnerschaft mbB
(86) International application number: PCT/CN2024/112285
(87) International publication number: WO 2025/036443

(57) **Abstract**

A fresh-keeping storage container (30) and a refrigerator (10). The fresh-keeping storage container (30) comprises a barrel body (310) in which a fresh-keeping storage space (330) for placing stored objects is provided; and a magnetic field device (410) comprising at least one magnetic field assembly (411, 421) and configured to form a magnetic field in the fresh-keeping storage space (330). The magnetic field device (410) is used to form the magnetic field in the fresh-keeping storage space (330), thereby improving the storage quality, shortening the freezing time, reducing the juice loss rate and nutrient loss of food, and prolonging the fresh-keeping cycle.

## Description

### CROSS REFERENCE TO RELATED APPLICATIONS

The present application claims priority to the following three patent applications: 1. Chinese Patent Application No. 202311027595.5, filed on August 15, 2023; 2. Chinese Patent Application No. 202311027512.2, filed on August 15, 2023; 3. Chinese Patent Application No. CN202311027603.6, filed on August 15, 2023. The entire contents of the above-referenced three patent applications are incorporated herein by reference.

### TECHNICAL FIELD

The present application relates to refrigerated and frozen storage devices, and in particular, to a fresh-keeping storage container and a refrigerator.

### BACKGROUND

The fresh-keeping and storage performance of household refrigerated and frozen equipment such as refrigerators has become an important indicator for measuring the performance of such equipment. Fresh food ingredients such as meat, fish and shrimp are prone to juice loss during storage, which leads to deterioration in taste and darkening in color.

Any related art mentioned in this specification does not constitute an admission or suggestion that such related art forms part of the common general knowledge in any jurisdiction, nor does it imply that such related art can be reasonably expected to be understood, considered relevant, and/or combined with other related art by a person skilled in the art.

### SUMMARY

An object of the present application is to provide a fresh-keeping storage container and a refrigerator that can effectively improve storage quality of stored items.

To achieve the above object, the present application provides a fresh-keeping storage container, comprising:
a barrel body, inside which a fresh-keeping storage space for placing stored items is defined;
a magnetic field device, which includes at least one magnetic field assembly and is configured to generate a magnetic field in the fresh-keeping storage space.

The present application also provides a refrigerator, which includes the above-mentioned fresh-keeping storage container.

The fresh-keeping storage container and the refrigerator provided by the present application utilize the magnetic field device to generate a magnetic field in the fresh-keeping storage space. The magnetic field helps to improve the storage quality of stored items; for example, it can shorten the freezing time, reduce juice loss rate and nutrient loss of food, decrease the number of microbes and bacteria, and extend fresh-keeping period.

### BRIEF DESCRIPTION OF DRAWINGS

Some specific embodiments of the application will be described in detail hereinafter by way of example and not by way of limitation with reference to the accompanying drawings. The same reference numerals identify the same or similar components or parts in the drawings. Those skilled in the art should appreciate that the drawings are not necessarily drawn to scale. In the drawings:
FIG. 1 is a schematic structural view of a refrigerator according to an embodiment of the present application;
FIG. 2 is a schematic structural view of the refrigerator shown in FIG. 1 with an upper door body omitted;
FIG. 3 is a schematic structural view of an air duct for supplying cooling airflow to a fresh-keeping storage container in the refrigerator according to an embodiment of the present application;
FIG. 4 is a schematic structural view of the relative position between a container body and a magnetic field device in the fresh-keeping storage container according to an embodiment of the present application;
FIG. 5 is a schematic structural view of the container body in the fresh-keeping storage container according to an embodiment of the present application;
FIG. 6 is a schematic structural view of the magnetic field device in the fresh-keeping storage container according to an embodiment of the present application;
FIG. 7 is a schematic structural view of the magnetic field device in the fresh-keeping storage container according to an embodiment of the present application;
FIG. 8 is an exploded view of components of the magnetic field device shown in FIG. 7;
FIG. 9 is a schematic structural view of the installation position of the magnetic field connecting member in the fresh-keeping storage container according to an embodiment of the present application;
FIG. 10 is a schematic structural view of an inner container body in the fresh-keeping storage container according to another embodiment of the present application;
FIG. 11 is a schematic structural view of a magnetic field device in a fresh-keeping storage container according to another embodiment of the present application;
FIG. 12 is a schematic structural view of the relative position between an inner container body and the magnetic field device in the fresh-keeping storage container according to another embodiment of the present application;
FIG. 13 is a schematic structural view of an inner container body in a fresh-keeping storage container according to yet another embodiment of the present application;
FIG. 14 is a schematic structural view of the magnetic field device in the fresh-keeping storage container according to yet another embodiment of the present application;
FIG. 15 is a schematic structural view of a relative position between the inner container body and the magnetic field device in the fresh-keeping storage container according to yet another embodiment of the present application;
FIG. 16 is a schematic structural view of the connection position between the magnetic field connecting member and the magnetic conductive plate in the fresh-keeping storage container according to another embodiment of the present application;
FIG. 17 is a schematic structural view of the connection mode between the magnetic field connecting member and the magnetic conductive plate in the fresh-keeping storage container according to another embodiment of the present application;
FIG. 18 is a schematic structural view of the connection position between the magnetic field connecting member and the magnetic conductive plate in the fresh-keeping storage container according to another embodiment of the present application;
FIG. 19 is a schematic structural view of the connection position between the magnetic field connecting member and the magnetic conductive plate in the fresh-keeping storage container according to another embodiment of the present application;
FIG. 20 is a schematic structural view of the connection position between the magnetic field connecting member and the magnetic conductive plate in the fresh-keeping storage container according to another embodiment of the present application;
FIG. 21 is a schematic structural view of the connection mode between the magnetic field connecting member and the magnetic conductive plate in the fresh-keeping storage container according to another embodiment of the present application;
FIG. 22 is a schematic structural view of the connection mode between the magnetic field connecting member and the magnetic conductive plate in the fresh-keeping storage container according to yet another embodiment of the present application;
FIG. 23 is a schematic structural view of the connection mode between the magnetic field connecting member and the magnetic conductive plate in the fresh-keeping storage container according to yet another embodiment of the present application;
FIG. 24 is a schematic structural view of the fixing mode between the magnetic field connecting member and the magnetic conductive plate in the fresh-keeping storage container according to an embodiment of the present application;
FIG. 25 is a schematic structural view of the fixing mode between the magnetic field connecting member and the magnetic conductive plate in the fresh-keeping storage container according to another embodiment of the present application;
FIG. 26 is a schematic view of the analysis result of the magnetic field strength at the center point under different contact area sizes between the magnetic field connecting member and the magnetic conductive plate in the fresh-keeping storage container according to an embodiment of the present application;
FIG. 27 is a front view of the fresh-keeping storage container according to an embodiment of the present application;
FIG. 28 is a schematic structural view of the fresh-keeping storage container according to an embodiment of the present application from another perspective;
FIG. 29 is a schematic structural view of the fresh-keeping storage container according to an embodiment of the present application from yet another perspective;
FIG. 30 is a cross-sectional view of the fresh-keeping storage container shown in FIG. 27 along the A-A direction;
FIG. 31 is a cross-sectional view of FIG. 27 along the B-B direction;
FIG. 32 is a schematic structural view of the top of the inner container body below the first magnetic source sheet in the fresh-keeping storage container according to an embodiment of the present application;
FIG. 33 is a schematic structural view of the top of the inner container body shown in FIG. 32 from one perspective;
FIG. 34 is a schematic structural view of the top of the inner container body shown in FIG. 32 from another perspective;
FIG. 35 is a schematic structural view of the air guide frame on the top wall of the inner container body in the fresh-keeping storage container according to an embodiment of the present application;
FIG. 36 is a schematic structural view of a wind deflector at the air guide frame shown in FIG. 35;
FIG. 37 is a partial enlarged view of position E in FIG. 35, showing the matching area between the wind deflector and the air guide frame;
FIG. 38 is a schematic structural view of the matching relationship between the inner container body and a drawer end plate assembly in the fresh-keeping storage container according to an embodiment of the present application;
FIG. 39 is an exploded view of the components shown in FIG. 38;
FIG. 40 is a schematic structural view of the end plate fitting in the fresh-keeping storage container according to an embodiment of the present application from one perspective;
FIG. 41 is a schematic structural view of the end plate fitting in the fresh-keeping storage container according to an embodiment of the present application from another perspective;
FIG. 42 is a schematic structural view of the annular sealing strip in the fresh-keeping storage container according to an embodiment of the present application;
FIG. 43 is a schematic structural view of the interior of the container body in the fresh-keeping storage container according to an embodiment of the present application;
FIG. 44 is a schematic structural view of the internal air duct of the fresh-keeping storage container according to an embodiment of the present application;
FIG. 45 is a partial enlarged view of position F in FIG. 44;
FIG. 46 is a schematic structural view of a drawer in the fresh-keeping storage container according to an embodiment of the present application from one perspective;
FIG. 47 is a schematic structural view of the drawer in the fresh-keeping storage container according to an embodiment of the present application from another perspective;
FIG. 48 is an exploded view of the components of the drawer in the fresh-keeping storage container according to an embodiment of the present application;
FIG. 49 is a partial enlarged cross-sectional view of the matching position between the top of the drawer end plate assembly and the top of the front end of the container body in the fresh-keeping storage container according to an embodiment of the present application;
FIG. 50 is a schematic structural view of the matching relationship between the top wall of the drawer end plate assembly and the bottom wall of the transition air duct in the fresh-keeping storage container according to an embodiment of the present application;
FIG. 51 is a schematic structural view of the bottom of the container body of the fresh-keeping storage container according to an embodiment of the present application;
FIG. 52 is a cross-sectional view of the drawer of the fresh-keeping storage container according to an embodiment of the present application; and
FIG. 53 is a schematic structural view of a tray in the drawer of the fresh-keeping storage container according to an embodiment of the present application.

### DETAILED DESCRIPTION OF EMBODIMENTS

It should be understood by those skilled in the art that the embodiments described below are only part of the embodiments of the present application, not all of the embodiments of the present application. This part of the embodiments is intended to explain the technical principles of the present application, and is not intended to limit the protection scope of the present application. Based on the embodiments provided in the present application, all other embodiments obtained by those of ordinary skill in the art without creative work shall still fall in the protection scope of the present application. Those skilled in the art should take the specification as a whole, and the technical solutions in each embodiment can also be appropriately combined to form other embodiments understandable to those skilled in the art.

In the description of this embodiment, it should be understood that the orientations or positional relationships indicated by the terms "longitudinal", "transverse", "length", "width", "thickness", "upper", "lower", "front", "rear", "left", "right", "vertical", "horizontal", "top", "bottom" and the like are based on the orientations or positional relationships shown in the accompanying drawings, which are only for the convenience of describing this embodiment and simplifying the description, and do not indicate or imply that the device or element referred to must have a specific orientation, be constructed and operated in a specific orientation, and therefore cannot be understood as a limitation on the present application. For example, unless otherwise explicitly limited to other orientations, in this embodiment, the direction of the refrigerator cabinet facing the door body is defined as the front, the direction opposite to the door body facing the cabinet is defined as the rear, the direction facing the ground where the refrigerator is installed is defined as the lower, and the direction opposite to the ground is defined as the upper.

In addition, the terms "first" and "second" are only used for descriptive purposes, and cannot be understood as indicating or implying relative importance or implicitly indicating the number of indicated technical features. Thus, the features defined with "first" and "second" can explicitly or implicitly include one or more of these features. In the description of the present application, the meaning of "plurality" is two or more, unless otherwise explicitly and specifically limited.

Furthermore, it should be noted that in the description of the present application, unless otherwise clearly specified and limited, the terms "installation", "connection" and "linkage" should be understood in a broad sense. For those skilled in the art, the specific meanings of the above terms in the present application can be understood according to specific situations.

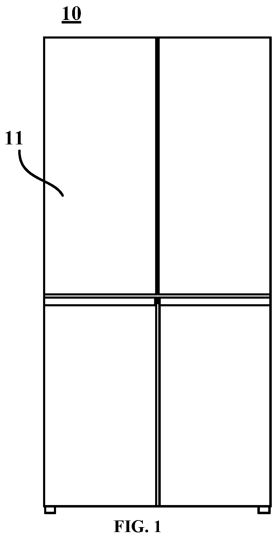

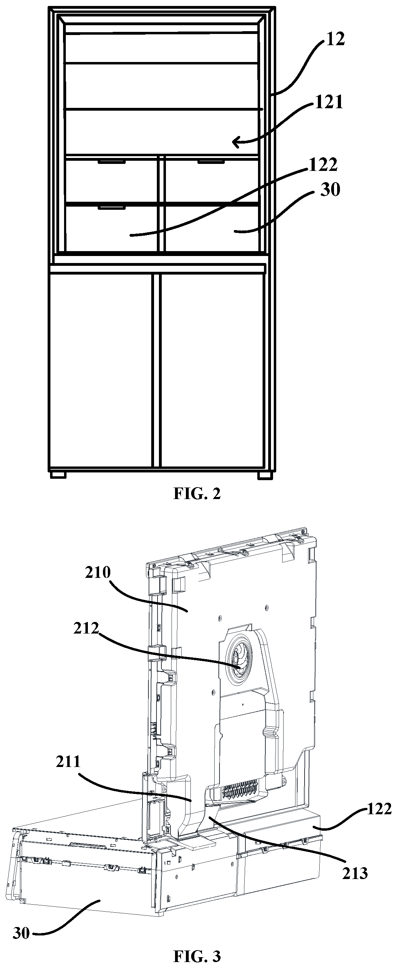

FIG. 1 is a schematic structural view of a refrigerator 10 according to an embodiment of the present application. FIG. 2 is a schematic structural view of the refrigerator 10 shown in FIG. 1 with an upper door body 11 omitted. As shown in FIGS.1-2, the refrigerator 10 of an embodiment of the present application comprises a cabinet body 12, a door body 11, and a refrigeration system. At least one storage compartment with an open front side is defined in the cabinet body 12, and a plurality of the storage compartments are typically provided, such as a refrigeration storage compartment 121, a freezing storage compartment, and a variable temperature storage compartment. The specific number and functions of the storage compartments can be configured according to pre-determined requirements. A cross-door refrigerator shown in FIGS. 1 and 2 is merely an example, and those skilled in the art can configure the specific number, functions and layout of the storage compartments according to requirements.

The refrigerator 10 can be an air-cooled refrigerator. FIG. 3 is a schematic structural view of an air duct for supplying cooling airflow to a fresh-keeping storage container 30 in the refrigerator 10 according to an embodiment of the present application. In FIG. 3, in order to show a refrigeration air duct assembly 210, other components in the refrigeration storage compartment 121 except for the fresh-keeping storage container 30 and the refrigeration air duct assembly 210 are hidden, for example, refrigerating inner container, compartment heat insulation layer, etc.. The refrigeration system is provided in the cabinet body 12. In the refrigeration system, a fan is used to send a cooling airflow that has undergone heat exchange through a heat exchanger (such as evaporator, not shown) to the storage compartment through an air supply outlet, and the cooling airflow then returns to an air duct through a return air inlet to achieve refrigeration. Since the cabinet body, door body, and refrigeration system of such refrigerators are themselves known to and easily implementable by those skilled in the art, in order not to obscure or blur the gist of the present application, the cabinet body, door body, and refrigeration system themselves will not be elaborated on in the following text.

A plurality of storage compartments can be spatially divided by means of storage racks, shelves, drawers, etc. to achieve corresponding storage functions, such as fresh-keeping, freezing, dry storage, and the like. In present embodiment, one or more fresh-keeping storage container 30 can be arranged in the refrigerator 10. In some alternative embodiments, the fresh-keeping storage container 30 can be disposed in one or more of the above-mentioned plurality of storage compartments, and through magnetic field and temperature regulation, long-term and high-quality fresh cold storage of ingredients such as meat and fish can be achieved. For example, the fresh-keeping storage container 30 can be arranged in any one of the refrigeration storage compartment 121, the frozen storage compartment, and the variable-temperature storage compartment. For another example, the fresh-keeping storage container 30 can be arranged in multiple ones of the refrigeration storage compartment 121, the frozen storage compartment, and the variable-temperature storage compartment at the same time, that is, the fresh-keeping storage containers 30 are respectively arranged in multiple different storage compartments at the same time. For yet another example, a plurality of fresh-keeping storage containers 30 can be arranged in one storage compartment as needed. FIG. 2 shows an example in which one fresh-keeping storage container 30 is arranged in the refrigeration storage compartment 121. The fresh-keeping storage container 30 is a drawer-type storage container. Other drawer-type storage containers 122 can be provided in the refrigeration storage compartment 121 in addition to the fresh-keeping storage container 30. For example, FIG. 2 shows an example where in addition to the fresh-keeping storage container 30, the refrigeration storage compartment 121 is further provided with three other drawer-type storage containers 122, and one of the other drawer-type storage containers 122 is arranged laterally side by side with the fresh-keeping storage container 30.

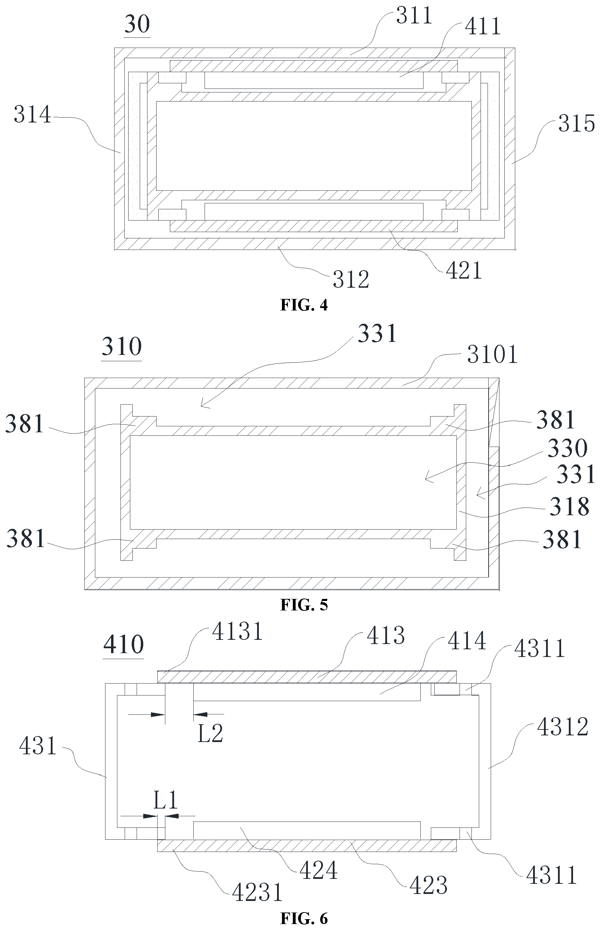

FIG. 4 is a schematic view of the relative position between a container body 310 and a magnetic field device 410 in the fresh-keeping storage container 30 according to an embodiment of the present application; FIG. 5 is a schematic view of the container body 310 in the fresh-keeping storage container 30 according to an embodiment of the present application; FIG. 6 is a schematic view of the magnetic field device 410 in the fresh-keeping storage container 30 according to an embodiment of the present application.

In this embodiment, the fresh-keeping storage container 30 comprises a container body 310 and a magnetic field device 410. A fresh-keeping storage space 330 for placing stored items is provided inside the container body 310. The container body 310 has a rectangular parallelepiped shape, in some embodiments, the container body 310 has a front opening, and a drawer that is slidable from the front opening is provided inside the container body 310, so that the stored items are contained by using the drawer. The container body 310 comprises a container body top wall 311, a container body bottom wall 312, a container body rear wall 313, a container body left side wall 314, and a container body right side wall 315.

A necessary condition for the fresh-keeping storage container 30 to achieve long-term fresh-keeping storage is to apply a magnetic field for fresh-keeping in the fresh-keeping storage space 330. The magnetic field device 410 comprises at least one magnetic field assembly and is configured to form the magnetic field in the fresh-keeping storage space 330. Through in-depth research on a fresh-keeping effect, magnetic field parameters of the fresh-keeping storage container 30 of the present embodiment are preferentially configured as an effective magnetic field strength range of 10-100Gs (1-10mT), further can be set to 20-80Gs, and still further can be set to 40-60Gs, for example, 10Gs, 20Gs, 40Gs, 60Gs, 80Gs, 100Gs, etc., and an effective magnetic field spacing range of 60-240mm, that is, the magnetic field can achieve the above strength requirements at a distance range from 60mm to 240mm from a magnetic source component.

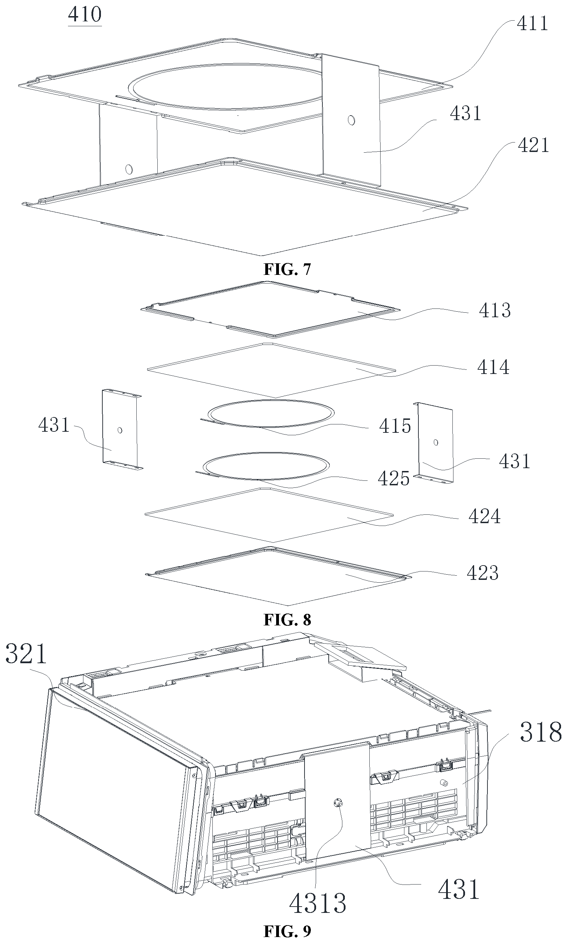

FIG. 7 is a schematic view of the magnetic field device 410 in the fresh-keeping storage container 30 according to an embodiment of the present application; FIG. 8 is an exploded view of the magnetic field device 410 shown in FiIG. 7. The magnetic field device 410 comprises a first magnetic field assembly 411 and a second magnetic field assembly 421. The first magnetic field assembly 411 and the second magnetic field assembly 421 are arranged oppositely and are respectively disposed in opposing side walls of the container body 310 of the fresh-keeping storage container 30. For example, the first magnetic field assembly 411 and the second magnetic field assembly 421 can be respectively disposed in the container body top wall 311 and the container body bottom wall 312 of the container body, or in the container body left side wall 314 and the container body right side wall 315. In the embodiment where the fresh-keeping storage container 30 adopts a drawer-type structure, the distance between the container body top wall 311 and the container body bottom wall 312 is smaller and areas thereof are larger, so the first magnetic field assembly 411 and the second magnetic field assembly 421 are preferably disposed in the container body top wall 311 and the container body bottom wall 312.

In some embodiments, the first magnetic field assembly 411 and the second magnetic field assembly 421 are disposed in an intermediate sandwich layer 331 of the container body 310. In other embodiments, the first magnetic field assembly 411 and the second magnetic field assembly 421 can be disposed on an outer side of an inner container body of the container body 310.

The first magnetic field assembly 411 and the second magnetic field assembly 421 can adopt a substantially same construction. For example, the first magnetic field assembly 411 comprises a first magnetic source plate 414 and a first magnetic conductive plate 413, and in some embodiments the first magnetic field assembly 411 further comprises a first electromagnetic coil 415. The second magnetic field assembly 421 comprises a second magnetic source plate 424 and a second magnetic conductive plate 423, and in some embodiments, the second magnetic field assembly 421 further comprises a second electromagnetic coil 425. The first magnetic source plate 414 abuts against a central region of the first magnetic conductive plate 413, and the second magnetic source plate 424 abuts against a central region of the second magnetic conductive plate 423.

The first magnetic source plate 414 and the second magnetic source plate 424 are uniformly magnetized permanent magnet plates, and considering cooperation with the first magnetic conductive plate 413 and the second magnetic conductive plate 423, the permanent magnet plates can be made of a permanent magnet material with a certain flexibility. For example, flexible rubber magnet plates made by compounding bonded ferrite magnetic powder with synthetic rubber and undergoing a calendering process can be used. Alternatively, in some embodiments, the first magnetic source plate 414 and the second magnetic source plate 424 can be constructed using electromagnetic coils.

A magnetization intensity of the first magnetic source plate 414 and the second magnetic source plate 424 is required to satisfy the above requirement of forming the magnetic field in the fresh-keeping storage space 330 with the effective magnetic field strength range of 10-100GS (1-10mT) and the effective magnetic field spacing range of 60-240mm. Magnetic field directions of the first magnetic source plate 414 and the second magnetic source plate 424 are set to be perpendicular to their respective surfaces. The magnetic fields of the first magnetic source plate 414 and the second magnetic source plate 424 are set to be in a same direction, that is, opposing sides of the first magnetic source plate 414 and the second magnetic source plate 424 are opposite magnetic poles, for example, both the first magnetic source plate 414 and the second magnetic source plate 424 have an upper surface as an N pole and a lower surface as an S pole.

The first magnetic conductive plate 413 and the second magnetic conductive plate 423 are made of a material having a low coercive force and a high magnetic permeability. An area of the first magnetic conductive plate 413 is slightly larger than an area of the first magnetic source plate 414, and an area of the second magnetic conductive plate 423 is slightly larger than an area of the second magnetic source plate 424. A region where the first magnetic conductive plate 413 contacts the first magnetic source plate 414 and a surface of the first magnetic source plate 414 are both configured to have a flatness meeting requirements, for example, a flatness tolerance threshold is required to be as small as possible, for example, less than 1mm, or less than 0.1mm, or less than 0.05mm. By limiting the flatness, after the first magnetic conductive plate 413 and the first magnetic source plate 414 are mated, they can be closely attached to achieve zero-gap fit, thereby improving the uniformity of the magnetic field.

Similarly, a region where the second magnetic conductive plate 423 contacts the second magnetic source plate 424 and a surface of the second magnetic source plate 424 are both configured to have a flatness meeting requirements, for example, the flatness tolerance threshold is required to be as small as possible, for example, less than 1mm, or less than 0.1mm, or less than 0.05mm. By limiting the flatness, after the second magnetic conductive plate 423 and the second magnetic source plate 424 are mated, they can be closely attached to achieve zero-gap fit, thereby improving the uniformity of the magnetic field. Tests have shown that the first magnetic conductive plate 413 can adjust the magnetic field distribution of the first magnetic source plate 414, and the second magnetic conductive plate 423 can adjust the magnetic field distribution of the second magnetic source plate 424, thereby making the magnetic field more uniform and expanding the coverage range of the magnetic field.

A large flatness tolerance, especially when the flatness tolerance is greater than or equal to 1mm, easily causes a local hollow drumming phenomenon between the magnetic conductive plate and the magnetic source plate. The local hollow drumming causes a gap between the magnetic conductive plate and the magnetic source plate, and the gap generates a magnetic resistance. The magnetic resistance further leads to an uneven magnetic field distribution and causes a magnetic field strength loss. In this embodiment, by limiting the flatness tolerance threshold to 1mm, local hollowing can be avoided, thereby preventing an increase in magnetic resistance in local areas, effectively reducing the loss of magnetic field strength, and ensuring the uniform distribution of the magnetic field. Further, in some embodiment, limiting the flatness tolerance threshold to 0.1mm or even 0.05mm can achieve better technical effects in this aspect.

In some embodiments, anti-corrosion layers can be formed on the surfaces of the first magnetic conductive plate 413 and the second magnetic conductive plate 423 by electroplating to meet the requirements of long-term use inside the refrigerator. The anti-corrosion layers are required to have a uniform thickness and not affect the fit between the first magnetic conductive plate 413 and the first magnetic source plate 414. In other embodiments, the first magnetic conductive plate 413 and the second magnetic conductive plate 423 can be subjected to anti-corrosion treatment using UV coatings.

In some embodiments, a magnetic conductive adhesive can be applied between the first magnetic source plate 414 and the first magnetic conductive plate 413, and between the second magnetic source plate 424 and the second magnetic conductive plate 423 to achieve better adhesion between the two. For the magnetic conductive adhesive, silicone magnetic conductive adhesive or epoxy magnetic conductive adhesive can be used.

The magnetic field device 410 further comprises at least one magnetic field connecting member 431. The magnetic field connecting member 431 connects the first magnetic field assembly 411 and the second magnetic field assembly 421 from two sides. The magnetic field connecting member 431 is made of a same material as the first magnetic conductive plate 413 and the second magnetic conductive plate 423. In embodiments where the first magnetic field assembly 411 and the second magnetic field assembly 421 are respectively disposed on a top surface and a bottom surface of the fresh-keeping storage container 30, the magnetic field connecting members 431 are respectively arranged on a left side surface and a right side surface of the fresh-keeping storage container 30, with their top portions connected to the first magnetic field assembly 411 and their bottom portions connected to the second magnetic field assembly 421. The first magnetic field assembly 411, the second magnetic field assembly 421, and the magnetic field connecting members 431 on the two sides form an outer magnetic conductive path surrounding the fresh-keeping storage container 30, while the fresh-keeping storage space 330 between the first magnetic field assembly 411 and the second magnetic field assembly 421 forms an internal magnetic field. The outer magnetic conductive path provides a closed path for magnetic field lines of the internal magnetic field, thereby enabling magnetic field convergence and improving the uniformity of the internal magnetic field, while reducing magnetic field release to an outside of the fresh-keeping storage container 30 and reducing interference to other external components (for example, avoiding magnetizing other components, etc.).

The magnetic field connecting member 431 is required to satisfy a requirement of converging an external magnetic field, and generally, the magnetic field connecting member 431 is connected to central positions of the first magnetic field assembly 411 and the second magnetic field assembly 421. The magnetic field connecting member 431 on each side can be one or multiple. FIG. 8 shows an embodiment where one magnetic field connecting member 431 is disposed at a center of front and rear positions of the first magnetic field assembly 411 and the second magnetic field assembly 421. Alternatively, a plurality of magnetic field connecting members 431 can be disposed at intervals along a front-rear direction of the fresh-keeping storage container 30.

In other embodiments, the magnetic field connecting member 431 can be disposed at a rear side of the fresh-keeping storage container 30. Those skilled in the art can set the number and position of the magnetic field connecting members 431 as needed.

A thickness of a thinnest section of each magnetic field connecting member 431 can be set to be less than or equal to 4mm and greater than or equal to 0.5mm. For example, it can be set to 4mm, 3mm, 2mm, 1mm, or 0.5mm. Furthermore, a thickness range of the magnetic field connecting member 431 can be set to 0.8mm to 3mm, such as 0.8mm, 1mm, 1.2mm, 1.5mm, 2mm, or 3mm. In some embodiments, each magnetic field connecting member 431 can have a uniform thickness as a whole.

A width of a narrowest section of each magnetic field connecting member 431 is denoted as W1', and the width W1' can be set to be greater than or equal to 5% of a side edge length W2 of the first magnetic conductive plate 413 or the second magnetic conductive plate 423 to which the magnetic field connecting member 431 is connected, and less than or equal to 75% of W2. That is to say, the width of the magnetic field connecting member 431 needs to be greater than or equal to 5% of the side edge length of the first magnetic conductive plate 413 or the second magnetic conductive plate 423, and less than or equal to 75% of a side edge length of the magnetic field assembly. For example, it can be set to 5%, 10%, 15%, 20%, 25%, 30%, 40%, 50%, 60%, 70%, 75%, etc. Furthermore, in some embodiments, the width W1' of the magnetic field connecting member 431 is approximately 20% to 30% of the side edge length of the first magnetic conductive plate 413 or the second magnetic conductive plate 423. The magnetic field connecting member 431 has a consistent width throughout.

The cooperation between the thickness and width of the magnetic field connecting member 431 can realize reliable magnetic communication of the magnetic circuit outside the fresh-keeping storage space.

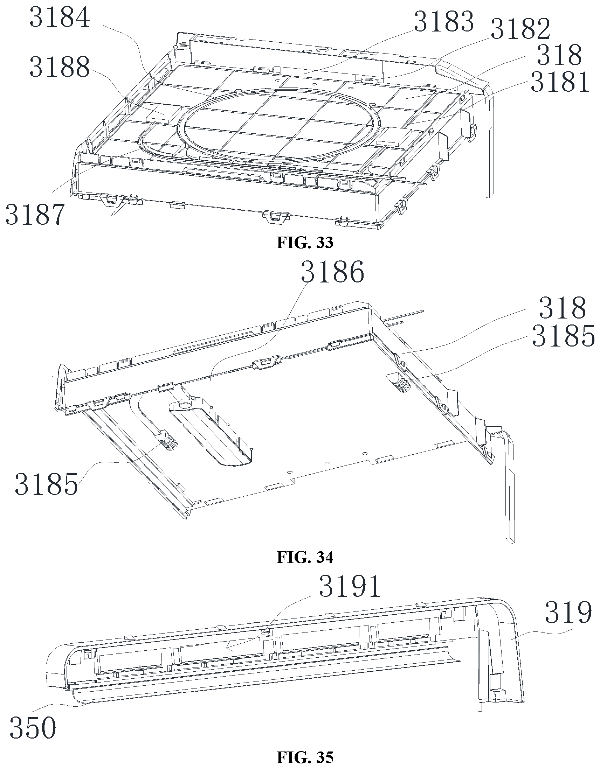

FIG. 9 is a schematic view of an installation position of the magnetic field connecting member 431 in the fresh-keeping storage container 30 according to an embodiment of the present application. The width (that is, a dimension along the front-rear direction of the fresh-keeping storage container 30) of the magnetic field connecting member 431 is one quarter to one third of a front-rear direction dimension of the first magnetic field assembly 411, and a thickness of the magnetic field connecting member 431 is substantially consistent with the first magnetic conductive plate 413. An upper end of the magnetic field connecting member 431 extends through an elongated hole 3183 (shown in FIG. 33) formed on a top edge of a side surface of an inner container body 318, and extends downward from the side surface of the inner container body 318, and a lower end of the magnetic field connecting member 431 extends through an elongated hole formed on a bottom edge of the side surface of the inner container body 318. A middle portion of the magnetic field connecting member 431 is fixed to the container body 310 by using a connecting member 4313 (such as a matching structure of a screw and a screw hole), which improves a structural reliability and a stability. Insulation layers on both sides of the container body 310 are provided with grooves corresponding to the magnetic field connecting member 431 to accommodate the magnetic field connecting member 431. That is to say, the container body left side wall 314 and the container body right side wall 315 respectively form sandwich structures, and the insulation layers and the magnetic field connecting member 431 are disposed in the sandwich structures.

Each magnetic field connecting member 431 comprises a main body plate 4312 and flanged edges 4311 extending from two ends of the main body plate 4312. The main body plate 4312 of the magnetic field connecting member 431 is respectively disposed in a side wall of the container body 310 connected to side walls where the first magnetic field assembly and the second magnetic field assembly are located, and is connected to the first magnetic field assembly 411 and the second magnetic field assembly 421 via the flanged edges 4311.

For example, when the first magnetic field assembly 411 and the second magnetic field assembly 421 are respectively disposed in the container body top wall 311 and the container body bottom wall 312, the main body plate 4312 of the magnetic field connecting member 431 is disposed in the container body left side wall 314, the container body right side wall 315, and the container body rear wall 313; the flanged edges 4311 are disposed at a top end or a bottom end of the main body plate 4312. The magnetic field connecting members 431 can be two in number, and the main body plates 4312 of the two magnetic field connecting members 431 can be disposed in the container body left side wall 314 and the container body right side wall 315, forming a ringshaped external magnetic circuit.

As another example, when the first magnetic field assembly 411 and the second magnetic field assembly 421 are respectively disposed in the container body left side wall 314 and the container body right side wall 315, the main body plate 4312 of the magnetic field connecting member 431 is disposed in the container body top wall 311, the container body bottom wall 312, and the container body rear wall; the flanged edges 4311 are disposed at a left end or a right end of the main body plate 4312. There are two magnetic field connecting member 431, and the main body plates 4312 of the two magnetic field connecting members 431 can be disposed on the container body left side wall 314 and the container body right side wall 315 of the container body to form an annular outer magnetic circuit.

The flanged edges 4311 of the magnetic field connecting member 431 are respectively connected to edges of the first magnetic conductive plate 413 and the second magnetic conductive plate 423. The magnetic field connecting member 431 is connected to the first magnetic field assembly 411 and the second magnetic field assembly 421 via the flanged edges 4311, which can achieve a more convenient assembly method, and with this connection method, the magnetic field connecting member 431 can be more reliably connected to the first magnetic field assembly 411 and the second magnetic field assembly 421, and a magnetic circuit connection is smoother. In order to avoid affecting a distribution of the magnetic field, ends of the flanged edges 4311 of the magnetic field connecting member 431 are required to have a certain gap with edges of the first magnetic source plate 414 and the second magnetic source plate 424.

The container body 310 is provided with one or more fixing structures for each magnetic field connecting member 431, and the magnetic field connecting member 431 is fixed to the container body 310 by using the fixing structure, thereby ensuring a reliable connection between the flanged edges 4311 of the magnetic field connecting member 431 and the first magnetic field assembly 411 and the second magnetic field assembly 421.

In a related art, the magnetic field device is generally assembled and formed as a whole and then mounted on a magnetic field fresh-keeping container, and when fixing is needed, a structure such as a claw is generally used to clip the first magnetic field assembly 411 or the second magnetic field assembly 421 which have a relatively large area. However, an applicant discovered during a research and development process that the magnetic field device 410 and the container body 310 are generally made of different materials, and their physical characteristics are greatly different. In particular, when the fresh-keeping storage container 30 is applied in a refrigerator, during the long-term refrigeration and storage process, problems such as loosening are likely to occur in the magnetic field device 410, and in severe cases, the magnetic field device 410 may be broken, which greatly reduces the fresh-keeping storage effect.

In addition, due to the distribution of the magnetic field and structural requirements, contact positions where the flanged edges 4311 of the magnetic field connecting member 431 connect with the first magnetic field assembly 411 and the second magnetic field assembly 421 are relatively small, and during long-term use in an alternating process of refrigeration and storage, connection parts may also break due to a stress.

Based on the results of the above in-depth research, the applicant has firmly fixed the magnetic field connecting members 431 on the container body 310 by providing fixing structures dedicated to fixing the magnetic field connecting members 431 on the container body 310. This avoids the above-mentioned problems, ensures the long-term operational stability of the magnetic field components in the fresh-keeping storage container 30, reduces the external force on the magnetic field connecting members 431, and thus ensures that the magnetic field connecting members 431 can reliably connect the first magnetic field assembly 411 and the second magnetic field assembly 421.

The container body 310 comprises the inner container body 318, and the inner container body 318 defines the fresh-keeping storage space. The container body 310 further provides a container outer shell 3101 on an outer side of the inner container body 318, and the container outer shell 3101 serves as an outermost layer of the fresh-keeping storage container 30. In some embodiments, a container outer shell 3101 is not disposed outside part of the side walls of the inner container body 318, and other thermal insulation parts, injection-molded parts, or adjacent components in the refrigerator can be used as the outermost layer of the fresh-keeping storage container 30.

The inner container body 318 can be formed by injection molding, and a drawer can be placed inside it, or the stored items can be directly placed. In some embodiments, the inner container body 318 can be an integral part or formed by splicing a plurality of inner container components through clamping or other connection methods. For example, the inner container body 318 can be split into three to four inner container components according to the convenience requirements of assembly.

A sandwich space 331 exists between the inner container body 318 and the container outer shell 3101 to form an air duct, the insulation layer, and a space for arranging the above-mentioned magnetic field device 410. Alternatively, the magnetic field connecting member 431 can be disposed on an outer side of the inner container body 318.

The first magnetic field assembly 411, the second magnetic field assembly 421, and the magnetic field connecting member 431 are respectively disposed on the outer side of the inner container body 318, between the container outer shell 3101 and the inner container body 318, and the fixing structure is disposed on the inner container body 318. The first magnetic field assembly 411, the second magnetic field assembly 421, and the magnetic field connecting member 431 are fixed to the inner container body 318, which can make the magnetic source component closer to the stored items and improve an application efficiency of the magnetic field. Alternatively, the magnetic field connecting member 431 can be disposed on the outer side of the inner container body 318.

As shown in FIGS. 4-6, the first magnetic field assembly 411 is disposed above a top wall of the inner container body 318, the second magnetic field assembly 421 is disposed below a bottom wall of the inner container body 318; and the main body plates 4312 of the magnetic field connecting members 431 are respectively disposed on outer sides of side walls at lateral sides of the inner container body 318, and the flanged edges 4311 are disposed at upper ends and lower ends of the main body plates 4312, and extend toward side edges of the first magnetic field assembly 411 and the second magnetic field assembly 421. Alternatively, the magnetic field connecting members 431 can be three or more, and their main body plates 4312 can be respectively disposed on outer sides of side walls at the lateral sides, a rear wall, and the like of the inner container body 318.

A type of the fixing structure can be: the inner container body 318 extends protruding walls 381 respectively at a top end and a bottom end of the side wall where the main body plate 4312 of the magnetic field connecting member 431 is located; and the fixing structure further comprises a through hole, the through hole is disposed on the protruding walls 381 and is adapted to an outer shape of the flanged edges 4311. The flanged edges 4311 extend through the through hole to the first magnetic field assembly 411 or the second magnetic field assembly 421. That is, the inner container body 318 fixes positions of the magnetic field connecting members 431 through the through hole formed on the protruding walls 381.

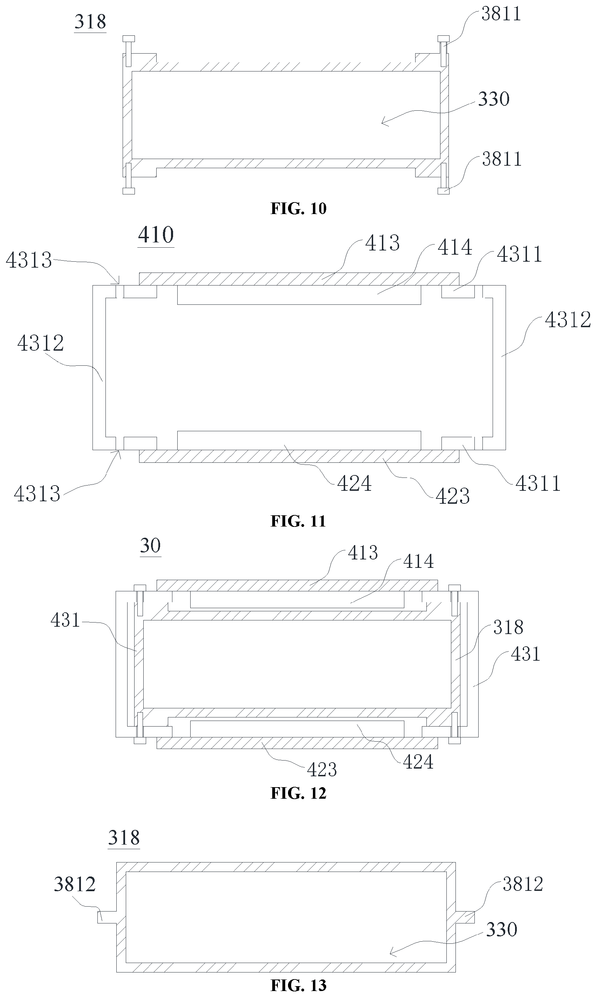

FIG. 10 is a schematic view of the inner container body 318 in the fresh-keeping storage container 30 according to another embodiment of the present application; FIG. 11 is a schematic view of the magnetic field device 410 in the fresh-keeping storage container 30 according to another embodiment of the present application; FIG. 12 is a schematic view of the relative position between the inner container body 318 and the magnetic field device 410 in the fresh-keeping storage container 30 according to another embodiment of the present application. To facilitate the illustration of the fixing structure, the container outer shell is omitted in FIGS. 10-12.

A type of the fixing structure can be: a retaining hole 4313 is formed on the flanged edges 4311, and the fixing structure further comprises a fixing structure 3811 for the flanged edge, the fixing structure 3811 for the flanged edge is disposed on the top wall and the bottom wall of the inner container body 318 at a position corresponding to the retaining hole 4313 of the flanged edge, and is connected to the retaining hole 4313 of the flanged edge. The fixing structure 3811 for the flanged edge can ensure a structural reliability of fixed positions between the flanged edges 4311 and the first magnetic field assembly 411 and the second magnetic field assembly 421 by fixing the flanged edges 4311. The fixing structure 3811 for the flanged edge can fix the retaining holes 4313 of the flanged edge by means of bolts, rivets, or the like.

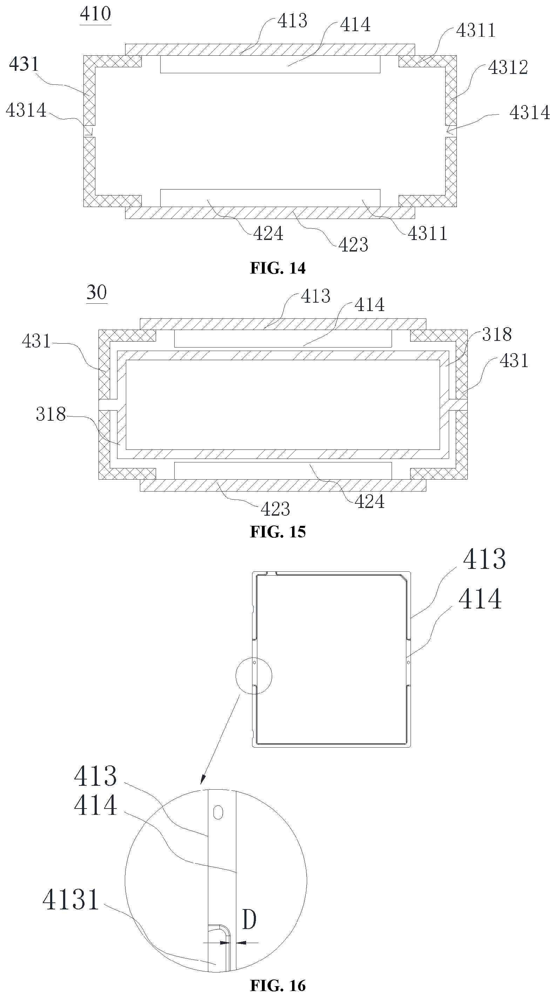

FIG. 13 is a schematic view of the inner container body 318 in the fresh-keeping storage container according to yet another embodiment of the present application; FIG. 14 is a schematic view of the magnetic field device 410 in the fresh-keeping storage container according to yet another embodiment of the present application; FIG. 15 is a schematic view of the relative position between the inner container body 318 and the magnetic field device 410 in the fresh-keeping storage container 30 according to yet another embodiment of the present application.

A type of the fixing structure can be: a fixing hole 4314 is formed in a middle portion of the main body plate 4312 of the magnetic field connecting member 431, and the fixing structure comprises a fixing structure 3812 for the main body plate, the fixing structure 3812 for the main body plate is disposed on the inner container body 318 at a position corresponding to the fixing hole 4314, and is connected to the fixing hole 4314 of the main body plate. In this fixing method, the fixing structure 3812 for the main body plate can reliably fix the magnetic field connecting members 431 to the side walls of the inner container body 318. The fixing structure 3812 for the main body plate can be a protruding column disposed on the inner container body 318, or can be a connecting member such as a screw or a rivet.

In a field of magnetic fields, it is well known to those skilled in the art that a gap and a hole in a magnetic conductive path can affect a magnetic field distribution, so a hole is generally avoided in the magnetic conductive path. Through extensive research and testing, the applicant has determined a size of a fixing hole that has a relatively small effect on the magnetic field distribution. That is, a ratio of a diameter of the fixing hole 4314 of the main body plate to a width direction of the main body plate 4312 is set to be less than or equal to 20%, and the diameter of the fixing hole 4314 of the main body plate is less than or equal to 20mm, and further can be set to be less than or equal to 10mm, For example, 10mm, 8mm, or 6mm can be selected to cooperate with a fastener with a corresponding diameter. In this way, on one hand, a connection reliability of the main body plate 4312 can be ensured, and on the other hand, an effect on the magnetic field distribution can also be reduced.

Each magnetic field connecting member 431 is disposed along a direction perpendicular to the first magnetic conductive plate 413 and the second magnetic conductive plate 423. That is, the magnetic field connecting member 431 provides a shortest magnetic connection path connecting the first magnetic field assembly 411 and the second magnetic field assembly 421. In some embodiments, the magnetic field connecting member 431 can have a consistent width from an end connected to the first magnetic field assembly 411 to an end connected to the second magnetic field assembly 421, that is, the magnetic field connecting member 431 has a uniform width overall.

Two ends of the magnetic field connecting member 431 are respectively connected to the first magnetic conductive plate 413 and the second magnetic conductive plate 423, and corresponding side edges of the first magnetic field assembly 411 and the second magnetic field assembly 421 are corresponding side edges of the first magnetic conductive plate 413 and the second magnetic conductive plate 423.

The magnetic source plates are disposed against side surfaces of the magnetic conductive plates close to an interior of the fresh-keeping storage space 330, that is, the first magnetic source plate 414 is located below the first magnetic conductive plate 413, and the second magnetic source plate 424 is located above the second magnetic conductive plate 423. The flanged edges 4311 of the magnetic field connecting member 431 use side surfaces far from the interior of the fresh-keeping storage space 330 to contact edges of side surfaces of the magnetic conductive plates close to the interior of the fresh-keeping storage space 330. That is, a top flanged edge contacts an edge of a lower surface of the first magnetic conductive plate 413; and a bottom flanged edge contacts an edge of an upper surface of the second magnetic conductive plate 423. A dimension of a contacting region between the flanged edges 4311 and the first magnetic conductive plate 413 and the second magnetic conductive plate 423 along an extension direction of the flanged edges ranges from 1 to 10mm, for example, it can be 6mm. A cross-sectional area (product of width and thickness) of each magnetic field connecting member 431 is greater than or equal to an area of the contacting region.

As shown in FIGS. 4-6, the first magnetic conductive plate 413 forms extension portions 4131 on two sides of a planar region thereof; the second magnetic conductive plate 423 forms extension portions 4231 on two sides of a planar region thereof. That is, the first magnetic conductive plate 413 and the second magnetic conductive plate 423 are at least slightly larger than the first magnetic source plate 414 and the second magnetic source plate 424 in a lateral direction. In some embodiments, the first magnetic conductive plate 413 forms the extension portions 4131 around the planar region thereof, and the second magnetic conductive plate 423 forms the extension portions 4231 around the planar region thereof. That is, the first magnetic conductive plate 413 and the second magnetic conductive plate 423 are overall slightly larger than the first magnetic source plate 414 and the second magnetic source plate 424. The extension portions 4131, 4231 are mainly used to achieve a structural cooperation with the magnetic field connecting member 431 and the container body 310. In order to make areas of the first magnetic source plate 414 and the second magnetic source plate 424 as large as possible, dimensions of the extension portions 4131, 4231 are generally set to be relatively small, for example, can extend 3-20mm, such as 3mm, 5mm, 10mm, or 20mm, and particularly can be set to 10mm.

In one embodiment, the dimensional parameters of the first magnetic source plate 414 and the second magnetic source plate 424 can be: length about 400mm, width about 330mm, thickness about 3mm. The dimensional parameters of the first magnetic conductive plate 413 and the second magnetic conductive plate 423 can be: thickness about 1mm, and an extension length of the extension portion 4131 about 10mm. The dimensional parameters of the connecting member 431 can be: thickness about 1mm, width about 100mm, and the extension length of the flanged edge 4311 about 16mm. An overlapping dimension between the flanged edge 4311 of the connecting member 431 and the extension portion 4131 of the magnetic conductive plate is about 6mm.

To ensure that the magnetic source sheet provides a sufficient magnetic field, the magnetic conductive plate is used to achieve uniform distribution of the magnetic field. An area of a fitting region between the magnetic conductive plate and the magnetic source plate is greater than or equal to 40% of a projected area of the magnetic conductive plate on a plane where the magnetic source plate is located. That is to say, a ratio of the projected area of the magnetic conductive plate on the plane where the magnetic source plate is located is required to be greater than 40%. Particularly, the area of the fitting region between the magnetic conductive plate and the magnetic source plate is greater than or equal to 90% of the projected area of the magnetic conductive plate on the plane where the magnetic source plate is located. That is to say, the ratio of the projected area of the magnetic conductive plate on the plane where the magnetic source plate is located is required to be greater than 90%. That is to say, by limiting the dimensions of the extension portions 4131 and 4231, the requirements for the magnetic field are ensured.

The magnetic field device 410 further comprises at least one magnetic field connecting member 431. Each magnetic field connecting member 431 is disposed on a side wall connected to the side walls where the first magnetic field assembly 411 and the second magnetic field assembly 421 are located, and is magnetically connected to the first magnetic field assembly 411 and the second magnetic field assembly 421. The magnetic field connecting member 431 is made of the same material as the first magnetic conductive plate 413 and the second magnetic conductive plate 423. The magnetic field connecting members 431 can be two or even more. For example, the magnetic field connecting members 431 can connect to the first magnetic field assembly 411 and the second magnetic field assembly 421 from one or more directions around the first magnetic field assembly 411 and the second magnetic field assembly 421.

The magnetic field connecting member 431 can be disposed in a sandwich layer of a side wall, or on an outer side of the inner container body 318. For example, when the first magnetic field assembly 411 and the second magnetic field assembly 421 are respectively disposed in the container body top wall 311 and the container body bottom wall 312, the magnetic field connecting member 431 is disposed in the container body left side wall 314 and the container body right side wall 315; or the magnetic field connecting member 431 is disposed in any one or more of the container body left side wall 314, the container body right side wall 315, the container body rear wall, and a container body front wall (when the container body 310 has a side wall on a front side). One side wall can be arranged with one or more magnetic field connecting members 431.

As another example, when the first magnetic field assembly 411 and the second magnetic field assembly 421 are respectively disposed in the container body left side wall 314 and the container body right side wall 315, the magnetic field connecting member is disposed in the container body top wall 311 and the container body bottom wall 312; or the magnetic field connecting member 431 is disposed in the container body top wall 311, the container body bottom wall 312, the container body rear wall, and the container body front wall (when the container body 310 has a side wall on a front side). One side wall is arranged with one or more magnetic field connecting members 431. That is, the fresh-keeping storage container 30 can respectively provide a plurality of magnetic field connecting members 431 on two sides, and the magnetic field connecting members 431 on each side are disposed at intervals, providing a plurality of magnetic connection paths for the first magnetic field assembly 411 and the second magnetic field assembly 421.

The flanged edges 4311 of the magnetic field connecting member 431 are respectively connected to the extension portions 4131, 4231 of the first magnetic conductive plate 413 and the second magnetic conductive plate 423, and a dimension of a contacting region (i.e., the flanged edges 4311) between each magnetic field connecting member 431 and the extension portions 4131, 4231 along an extension direction of the magnetic field connecting member 431 is set to be greater than or equal to 1mm and less than or equal to 10mm. That is, when the magnetic field connecting member 431 is disposed on two sides of the container body 310, a lateral distance of the contacting region between the magnetic field connecting member 431 and the extension portions 4131, 4231 is greater than or equal to 1mm and less than or equal to 10mm, which can ensure that the magnetic field connecting member 431 provides reliable magnetic connection paths for the first magnetic field assembly 411 and the second magnetic field assembly 421.

In some embodiments, the magnetic field connecting member 431 can have a consistent width from an end connected to the first magnetic field assembly 411 to an end connected to the second magnetic field assembly 421, that is, the magnetic field connecting member 431 has a uniform width overall. Additionally, a ratio of the width of each magnetic field connecting member 431 to a corresponding side edge length of the first magnetic field assembly 411 or the second magnetic field assembly 421 is set to be greater than or equal to 1% and less than or equal to 50%, the width needs to be greater than or equal to 1% of the side edge length of the magnetic field assembly and less than or equal to 50% of the side edge length of the magnetic field assembly. For example, the above ratio can be set to 1%, 5%, 10%, 20%, 30%, 40%, 50%. Further, the width can be set to be greater than or equal to 5% of the side edge length of the first magnetic field assembly 411 or the second magnetic field assembly 421 to which the magnetic field connecting member 431 is connected, and less than or equal to 30%. That is, the width of the magnetic field connecting member 431 needs to be greater than or equal to 5% of the side edge length of the magnetic field assembly and less than or equal to 30% of the side edge length of the magnetic field assembly. For example, it can be set to 5%, 10%, 15%, 20%, 25%, 30%, etc.

FIG. 16 is a schematic view of the cooperation between the first magnetic conductive plate 413 and the first magnetic source plate 414 in the fresh-keeping storage container 30 according to an embodiment of the present application.

The first magnetic conductive plate 413 extends outward around a planar region corresponding to the first magnetic source plate 414 to form the extension portions 4131. The extension portions 4131 and a planar region (or referred to as a planar main body portion) against which the first magnetic source plate 414 abuts form a stepped surface. That is, at least a partial section of edges around the first magnetic conductive plate 413 (i.e., the extension portions) protrudes from the planar region toward a side of the first magnetic source plate 414. The first magnetic source plate 414 fits in the planar region defined by the protruding extension portions 4131. The extension portions 4131 protrude toward the side of the first magnetic source plate 414 for cooperation with the container body 310 and/or the magnetic field connecting member 431, serving as a connection component of the first magnetic conductive plate 413. An outer periphery of the first magnetic source plate 414 has a certain spacing D (for example, 1-3mm) with a stepped surface of the extension portions 4131, that is, the first magnetic source plate 414 only abuts against the first magnetic conductive plate 413 through one side surface, while the outer periphery does not contact the first magnetic conductive plate 413, forming a magnetic gap. This ensures that the magnetic field of the first magnetic source plate 414 can influence the fresh-keeping storage space 330 as uniformly as possible without an edge distortion caused by the first magnetic conductive plate 413.

A protrusion height of the extension portions 4131 can be greater than a thickness of the first magnetic source plate 414, and for example, in a specific embodiment, when the thickness of the first magnetic source plate 414 is 3mm, the protrusion height of the extension portions 4131 can be approximately 3mm. That is, after the first magnetic source plate 414 is assembled on the first magnetic conductive plate 413, a bottom surface of the first magnetic field assembly 411 is substantially flush. The bottom surface of the first magnetic field assembly 411 forms a certain air gap with an opposing inner container top surface. Using the air gap, a direct conduction of a cooling from a cooling airflow to the fresh-keeping storage space 330 can be avoided. That is, an air gap is formed between the first magnetic field assembly 411 and the inner container body to avoid an excessively rapid heat transfer from a container body top surface.

To reduce the weight of the magnetic field storage container and save the occupied space, a thickness of the first magnetic conductive plate 413 is required to be as thin as possible, but considering that the first magnetic conductive plate 413 is required to achieve a uniform magnetic field distribution, the thicknesses of the first magnetic conductive plate 413 and the second magnetic conductive plate 423 can be configured to be no greater than 3mm, that is, less than or equal to 3mm, for example, the thickness can be 1mm. The thicknesses of the first magnetic source plate 414 and the second magnetic source plate 424 can not exceed 8mm, that is, less than or equal to 8mm. For example, magnetic source plates with thicknesses of 3mm, 4mm, or 5mm can be used.

The structure of the second magnetic field assembly 421 is substantially the same as that of the first magnetic field assembly 411. That is to say, the second magnetic conductive plate 423 has a substantially same shape, construction, and parameters as the first magnetic conductive plate 413, and the second magnetic source plate 424 has a substantially same shape, construction, and parameters as the first magnetic source plate 414. In some embodiments, the second magnetic field assembly 421 is basically opposite to the first magnetic field assembly 411, and considering the construction and dimensions of opposing sides of the fresh-keeping storage container 30, there can be a small offset. That is, projection planes of the second magnetic field assembly 421 and the first magnetic field assembly 411 are not required to completely overlap. In some embodiments, a bottom surface area of the fresh-keeping storage container 30 is slightly larger than a top surface area, and a size of the second magnetic field assembly 421 is also slightly larger than a size of the first magnetic field assembly 411.

The first magnetic field assembly 411 and the second magnetic field assembly 421 can respectively cover corresponding sides of the fresh-keeping storage space 330. In embodiments where the first magnetic field assembly 411 and the second magnetic field assembly 421 are respectively disposed on a top surface and a bottom surface of the fresh-keeping storage container 30, the first magnetic field assembly 411 can cover the top surface of the fresh-keeping storage space 330, while the second magnetic field assembly 421 can cover the bottom surface of the fresh-keeping storage space 330. Magnetic field directions of the first magnetic source plate 414 and the second magnetic source plate 424 can be set to be the same, that is, opposing magnetic poles of the first magnetic source plate 414 and the second magnetic source plate 424 are opposite magnetic poles, thereby further ensuring the uniformity of the magnetic field.

The magnetic field connecting member 431 can connect the first magnetic field assembly 411 and the second magnetic field assembly 421 from two sides. The magnetic field connecting members 431 are respectively arranged on a left side surface and a right side surface of the fresh-keeping storage container 30, with their top flanged edges 4311 connected to the first magnetic field assembly 411 and their bottom flanged edges 4311 connected to the second magnetic field assembly 421. The first magnetic field assembly 411, the second magnetic field assembly 421, and the magnetic field connecting members 431 on the two sides form an outer magnetic conductive path surrounding the fresh-keeping storage container 30, while the fresh-keeping storage space 330 between the first magnetic field assembly 411 and the second magnetic field assembly 421 forms an internal magnetic field. The outer magnetic conductive path provides a closed path for magnetic field lines of the internal magnetic field, thereby enabling magnetic field convergence and improving the uniformity of the internal magnetic field, while reducing magnetic field release to the outside of the fresh-keeping storage container 30 and reducing interference to other external components (for example, avoiding magnetizing other components, etc.).

The magnetic field connecting member 431 is required to satisfy the requirement of converging the external magnetic field. Generally speaking, the magnetic field connecting member 431 is connected to central positions of the first magnetic field assembly 411 and the second magnetic field assembly 421. The magnetic field connecting member 431 on each side can be one or multiple. The drawings show an embodiment where one magnetic field connecting member 431 is disposed at the center of front and rear positions of the first magnetic field assembly 411 and the second magnetic field assembly 421. Alternatively, a plurality of magnetic field connecting members 431 can be arranged at intervals along the front-rear direction of the magnetic field fresh-keeping container.

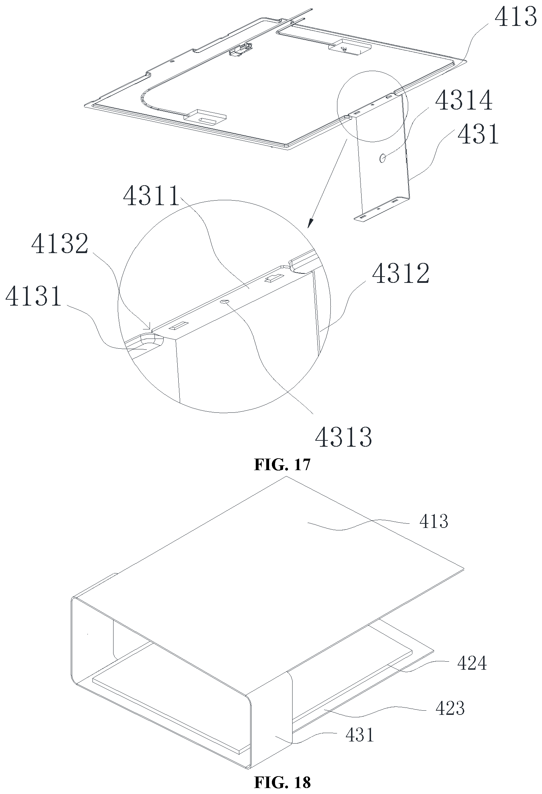

FIG. 17 is a schematic view of the matching structure between the magnetic field connecting member 431 and the first magnetic conductive plate 413 in the fresh-keeping storage container 30 according to an embodiment of the present application, and a partial enlarged view thereof. At a position where the first magnetic conductive plate 413 connects with the magnetic field connecting member 431, the extension portion 4131 can not protrude, forming a clearance notch 4132. That is, at a position of the clearance notch 4132, the extension portion 4131 is flush with a main body portion of a planar region of the first magnetic conductive plate 413, or has a protrusion height smaller than other positions of the extension portion 4131. The magnetic field connecting member 431 forms a flanged edge 4311 facing the first magnetic conductive plate 413 at a top portion, and uses the flanged edge 4311 to reliably contact a position of the notch 4132 of the first magnetic conductive plate 413, forming a reliable magnetic connection. A retaining hole 4313 is formed on the flanged edge 4311, through which a firm connection with the first magnetic conductive plate 413 and the container body 310 can be achieved by means such as a screw and a screw hole. The flanged edge 4311 of the magnetic field connecting member 431 is also required to have a certain gap from a side edge of the first magnetic source plate 414, forming a magnetic gap. Using the above notch, after the magnetic field connecting member 431 is connected with the first magnetic conductive plate 413, the magnetic field connecting member 431 will not affect a connection between the first magnetic conductive plate 413 and the container body 310 in a thickness direction. Similarly, a lower end of the magnetic field connecting member 431 can also be connected to the second magnetic conductive plate 423 using a similar connection structure.

In some embodiments, in order to improve a magnetic field strength, the first magnetic field assembly 411 and the second magnetic field assembly 421 further add the electromagnetic coils 415, 425, and the electromagnetic coils 415, 425 are respectively located on inner sides of the first magnetic source plate 414 and the second magnetic source plate 424. The electromagnetic coils 415, 425 can be wound into a flat ring shape by a copper wire, and a number of turns of the copper wire can be set according to magnetic field requirements and structural dimensions. In some embodiments, the first electromagnetic coil 415 and the second electromagnetic coil 425 are respectively located at central positions of the first magnetic source plate 414 and the second magnetic source plate 424, and when energized, magnetic pole directions of formed magnetic fields are consistent with the abutting first magnetic source plate 414 and second magnetic source plate 424.

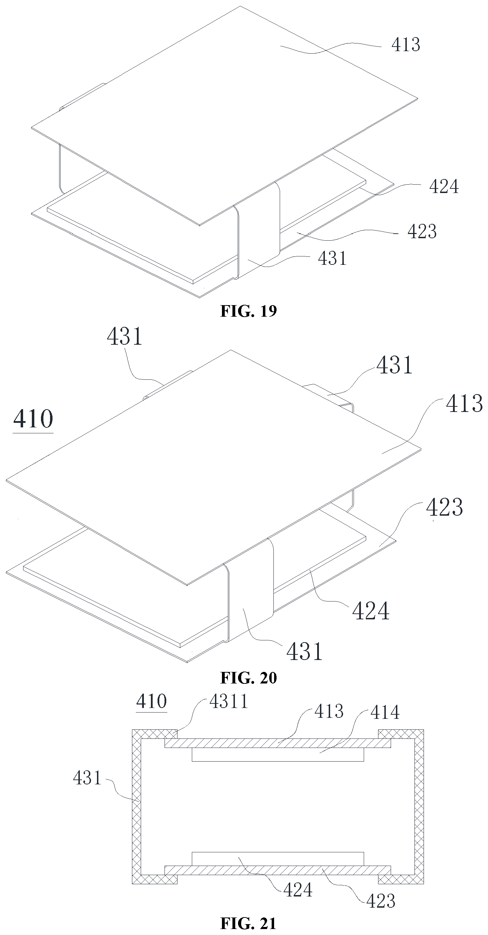

FIG. 18 is a schematic view of a connection position between the magnetic field connecting member 431 and the magnetic conductive plate in the fresh-keeping storage container 30 according to another embodiment of the present application, and the magnetic field connecting member 431 can be connected to a front end or a rear end position on two sides of the magnetic conductive plate. FIG. 19 is a schematic view of a connection position between the magnetic field connecting member 431 and the magnetic conductive plate in the fresh-keeping storage container 30 according to another embodiment of the present application, and the magnetic field connecting member 431 can be connected to a position on two sides of the magnetic conductive plates 413, 423 close to the front end or the rear end, for example, disposed at a one-quarter position from the front and the rear. This may bring a certain instability to the magnetic field, but when necessary, can provide a structural clearance for the container body 310. In some embodiments, the magnetic field connecting members 431 on the two sides are staggered in a front-rear direction. For example, a left magnetic field connecting member 431 is connected to front ends of the magnetic conductive plates 413, 423, while a right magnetic field connecting member 431 is connected to rear ends of the magnetic conductive plates 413, 423. As another example, the left magnetic field connecting member 431 is connected to a one-quarter position of the magnetic conductive plates 413, 423, while the right magnetic field connecting member 431 is connected to a three-quarter position of the magnetic conductive plates 413, 423. Those skilled in the art can select the position of the magnetic field connecting member 431 according to structural requirements. In general, the magnetic field connecting member 431 is disposed at a middle portion of the container body 310 and connected to middle portions of the magnetic conductive plates 413, 423.

FIG. 20 is a schematic view of the connection position between the magnetic field connecting member 431 and the magnetic conductive plate in the fresh-keeping storage container 30 according to another embodiment of the present application. The magnetic field connecting members 431 are respectively disposed on a left side, a right side, and a rear side of the first magnetic field assembly 411 and the second magnetic field assembly 421, that is, the first magnetic field assembly 411 and the second magnetic field assembly 421 achieve a magnetic connection on three sides using the magnetic field connecting members 431. The magnetic field connecting members 431 can be disposed at middle portions of each side edge. On this basis, those skilled in the art can implement a solution in which a plurality of magnetic field connecting members 431 are arranged at intervals on each side.

When the magnetic field connecting members 431 are respectively disposed on the left side, the right side, and the rear side of the first magnetic field assembly 411 and the second magnetic field assembly 421, the magnetic field connecting members 431 are not limited to being connected to middle portions of corresponding side edges, and also can be disposed at a position deviating from the middle portions and close to a connection position on one side.

FIG. 21 is a schematic structural view of the connection mode between the magnetic field connecting member and the magnetic conductive plate in the fresh-keeping storage container according to another embodiment of the present application. The flanged edges 4311 of the magnetic field connecting member 431 use side surfaces facing the interior of the fresh-keeping storage space 330 to contact side surfaces of the extension portions 4131, 4231 away from the interior of the fresh-keeping storage space 330. For example, the first magnetic source plate 414 can abut against a lower surface of the first magnetic conductive plate 413, and a top flanged edge 4311 of the magnetic field connecting member 431 uses a lower surface to abut against an upper surface of the extension portion 4131 of the first magnetic conductive plate 413; and the second magnetic source plate 424 can abut against an upper surface of the second magnetic conductive plate 423, and a bottom flanged edge 4311 of the magnetic field connecting member 431 uses an upper surface to abut against a lower surface of the extension portion 4231 of the second magnetic conductive plate 423.

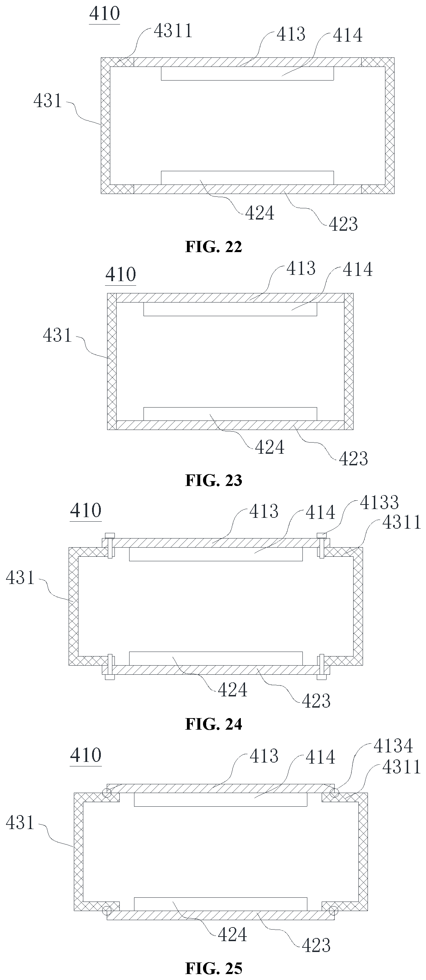

FIG. 22 is a schematic structural view of the connection mode between the magnetic field connecting member 431 and the magnetic conductive plate in the fresh-keeping storage container 30 according to yet another embodiment of the present application. The flanged edges 4311 of the magnetic field connecting member 431 use end portions to contact end portions of the extension portions 4131, that is, there is no longitudinal overlapping region between the magnetic field connecting member 431 and the first magnetic conductive plate 413 and the second magnetic conductive plate 423, and they contact each other through the end portions.

FIG. 23 is a schematic structural view of the connection mode between the magnetic field connecting member 431 and the magnetic conductive plate in the fresh-keeping storage container 30 according to yet another embodiment of the present application. The magnetic field connecting member 431 is not provided with the flanged edges 4311 and has a plate body shape. The first magnetic conductive plate 413 and the second magnetic conductive plate 423 extend to two sides to abut against inner sides of the magnetic field connecting member 431. The embodiments shown in FIG. 22 and FIG. 23 impose higher requirements on a connection process between the magnetic field connecting member 431 and the magnetic conductive plates.

FIG. 24 is a schematic structural view of the fixing mode between the magnetic field connecting member 431 and the magnetic conductive plate in the fresh-keeping storage container 30 according to an embodiment of the present application. Connection positions between the flanged edges 4311 of the magnetic field connecting member 431 and the first magnetic conductive plate 413 and the second magnetic conductive plate 423 are respectively fixed using fasteners (screws, etc.) 4133.

FIG. 25 is a schematic structural view of the fixing mode between the magnetic field connecting member 431 and the magnetic conductive plate in the fresh-keeping storage container according to another embodiment of the present application. Connection positions between the flanged edges 4311 of the magnetic field connecting member 431 and the first magnetic conductive plate 413 and the second magnetic conductive plate 423 are respectively fixed using an adhesive bonding or a welding at fixed positions 4134.

Those skilled in the art can flexibly select the required connection methods and fixing methods according to technical process requirements, and the connection methods and fixing methods provided in the above embodiments can be flexibly combined. In some embodiments, the magnetic source plates abut against side surfaces of the magnetic conductive plates close to an interior of the fresh-keeping storage space, and the flanged edges 4311 of the magnetic field connecting member 431 use side surfaces away from the interior of the fresh-keeping storage space 330 to contact side surfaces of the extension portions 4131, 4231 close to the interior of the fresh-keeping storage space 330. For example, the first magnetic source plate 414 can abut against a lower surface of the first magnetic conductive plate 413, and a top flanged edge 4311 of the magnetic field connecting member 431 uses an upper surface to abut against a lower surface of the extension portion 4131 of the first magnetic conductive plate 413. The top flanged edge 4311 of the magnetic field connecting member 431 uses an upper surface to abut against a lower surface of the extension portion 4131 of the first magnetic conductive plate 413; and the second magnetic source plate 424 can abut against an upper surface of the second magnetic conductive plate 423, and a bottom flanged edge 4311 of the magnetic field connecting member 431 uses a lower surface to abut against an upper surface of the extension portion 4231 of the second magnetic conductive plate 423. Such an abutting structure can make a structure of the magnetic field device 410 more compact and a magnetic circuit smoother.

In some embodiments, a dimension L1 of a contacting region between the flanged edges 4311 and the extension portions 4131, 4231 along an extension direction of the flanged edges 4311 ranges from 1 to 10mm. For a magnetic circuit, theoretically speaking, the larger the contacting region between the flanged edges 4311 and the extension portions 4131, the more favorable the contacting region is for a magnetic circuit conduction, but as the contacting region increases, a beneficial effect on the magnetic circuit will gradually decrease, and more space will be occupied.

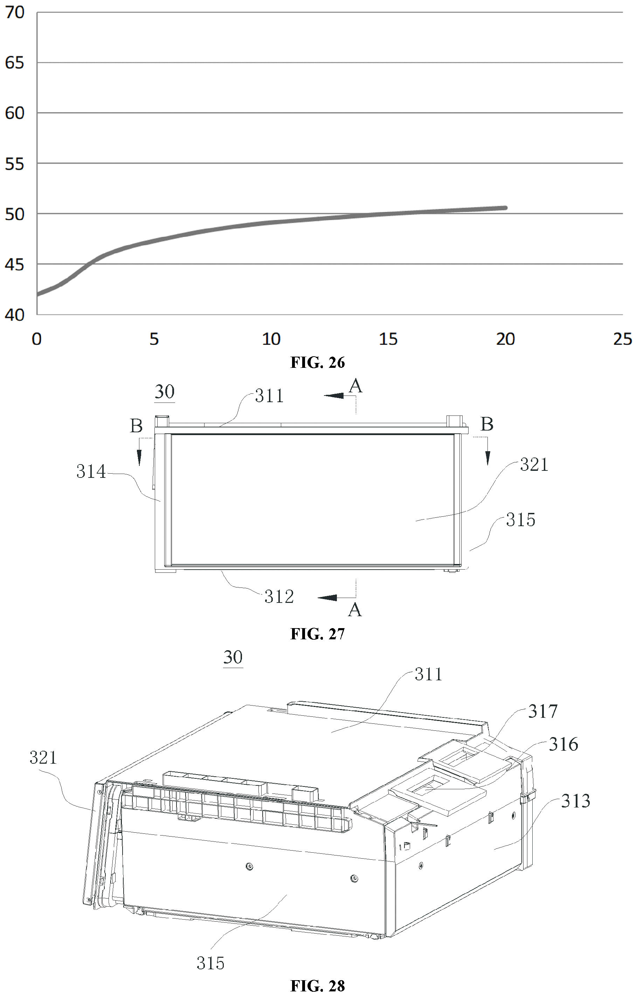

During the research and development process, the applicant conducted extensive analysis on the contacting regions between the flanged edges 4311 and the extension portions 4131, 4231, and analysis results are as follows: using a magnetic field connecting member 431 with a thickness of 1mm and a width of 100mm and the magnetic source plates of specified specifications, when the dimension L1 of the contacting regions of the extension portions 4131, 4231 along the extension direction of the flanged edges 4311 is respectively 0mm (when the flanged edges 4311 contact end portions of the extension portions 4131, 4231 without overlapping), 1mm, 3mm, 6mm, 9mm, 12mm, 15mm, and 20mm, analysis was conducted respectively. Since a magnetic field density at a center point will vary with different working conditions, and in order to compare a distribution of a uniform magnetic field region under different working conditions, magnetic field strengths at a center point of the fresh-keeping storage space 330 in a magnetic field region with a uniformity better than 10% under the above different contact area conditions are respectively: 42Gs, 43Gs, 46Gs, 47.8Gs, 48.9Gs, 49.5Gs, 50.0Gs, and 49.5Gs. FIG. 26 is a schematic view of the analysis result of the magnetic field strength at the center point under different contact area sizes between the magnetic field connecting member 431 and the magnetic conductive plate in the fresh-keeping storage container 30 according to an embodiment of the present application.

It can be seen from the above analysis that in an initial stage, the magnetic field increases rapidly with the dimension L1, and after reaching a certain value, an effect of the magnetic field increase with the dimension L1 gradually decreases. Based on the above analysis, in a solution of the present embodiment, a range of the dimension L1 can be set to 1 to 10mm, particularly 3-8mm, such as 3mm, 5mm, 6mm, 8mm, and specifically selected as 6mm. This both satisfies a need for the magnetic field strength and minimizes a space occupation. A gap L2 exists between ends of the flanged edges 4311 and the magnetic source plates, and using the gap L2, a magnetic gap can be provided between the magnetic source plates and the flanged edges 4311, avoiding the magnetic field connecting member 431 from changing a magnetic field distribution of the magnetic source plates themselves, and ensuring a uniformity of a magnetic field distribution in the fresh-keeping storage space 330.

The flanged edges 4311 of the magnetic field connecting member 431 use side surfaces away from the interior of the fresh-keeping storage space 330 to contact side surfaces of the extension portions 4131 close to the interior of the fresh-keeping storage space 330. A cross-sectional area of each magnetic field connecting member 431 is greater than or equal to an area of the contacting regions. The cross-sectional area of the magnetic field connecting member 431 is a product of a width and a thickness of the magnetic field connecting member 431, which is related to a magnetic flux conducting capability of the magnetic field connecting member 431. The cross-sectional area of each magnetic field connecting member 431 being greater than or equal to the area of the contacting regions can ensure that the magnetic flux conducting capability of the magnetic field connecting member 431 has a sufficient magnetic flux conducting capability.

Similarly, a lower end of the magnetic field connecting member 431 can adopt a same connection structure to connect with the second magnetic conductive plate 423.

In this embodiment, the refrigerator 10 achieves a fresh-keeping storage effect through a precise temperature control of the fresh-keeping storage container 30 combined with a magnetic field influence. In order to achieve the precise temperature control, an air duct system of the refrigerator 10 can provide a dedicated fresh-keeping container air supply channel 211 for the fresh-keeping storage container 30, and through an adjustment of the fresh-keeping container air supply channel 211, a control of an on-off and/or a magnitude of the cooling airflow to the fresh-keeping storage container 30 is achieved.

The refrigerator 10 can be an air-cooled refrigerator, and an air duct assembly is disposed at a rear portion of the cabinet body 12, the air duct assembly is used to define an air supply duct for providing the cooling airflow. The refrigeration air duct assembly 210 is disposed at a back of the refrigeration storage compartment 121. A refrigeration air supply fan 212 is disposed in the refrigeration air duct assembly 210, and the refrigeration air supply fan 212 promotes a formation of the cooling airflow from an evaporator cavity where an evaporator of the refrigerator 10 is located through the air supply duct to the storage compartment. The fresh-keeping container air supply channel 211 serves as one of a plurality of air supply ducts provided by the refrigeration air duct assembly 210, and an on-off and/or a magnitude of an airflow thereof can be controllably adjusted. For example, an independent adjustable damper can be disposed in the fresh-keeping container air supply channel 211. As another example, the refrigeration air duct assembly 210 is provided with other types of airflow distribution devices that can controllably adjust the airflow in the fresh-keeping container air supply channel 211.

The refrigeration air duct assembly 210 shown in FIG. 3 can use a centrifugal fan as the refrigeration air supply fan 212, the refrigeration air supply fan 212 draws a low-temperature air from the evaporator cavity from the rear, and then uses an airflow distribution device to distribute the cooling airflow, wherein the fresh-keeping container air supply channel 211 can be controllably adjusted for opening and closing and magnitude.

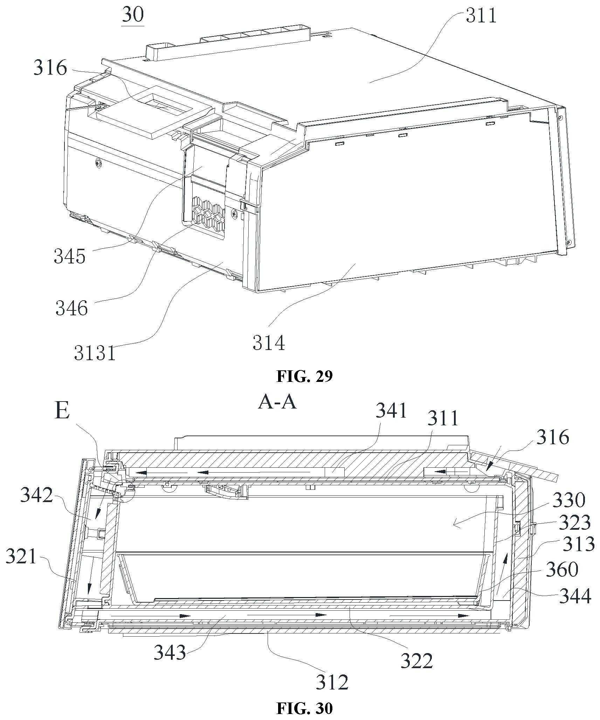

FIG. 27 is a front view of the fresh-keeping storage container according to an embodiment of the present application. FIG. 28 is a schematic structural view of the fresh-keeping storage container according to an embodiment of the present application from another perspective. FIG. 29 is a schematic structural view of the fresh-keeping storage container according to an embodiment of the present application from yet another perspective. In FIG. 29, in order to show an inter-container return air section 345, a rear wall of the container outer shell is hidden, and an inner container body return air inlet 346 is disposed on a rear wall of the inner container body below a container body return air inlet 317.

The fresh-keeping storage container 30 can adopt a drawer-type structure. The fresh-keeping storage container comprises the container body 310 and the drawer 320. The container body 310 has an overall box shape and has the front opening, and the container body 310 comprises the container body top wall 311, the container body bottom wall 312, the container body rear wall 313, the container body left side wall 314, and the container body right side wall 315. The drawer 320 is slidably disposed inside the container body 310 through the front opening. The drawer 320 comprises a drawer bottom plate 322, a drawer rear plate 323, a drawer left side plate 324, a drawer right side plate 325, and a drawer end plate assembly 321, and the drawer end plate assembly 321 is disposed at a front portion of the drawer 320. When the drawer 320 is placed in the container body 310, the drawer end plate assembly 321 can seal the front opening of the container body 310, so that a closed storage environment is formed inside the container body 310, and thus the drawer 320 and the container body 310 jointly define the fresh-keeping storage space 330. When the drawer 320 is pulled out of the container body 310, the drawer 320 exposes a space at a top portion for placing and removing the stored items.

A container body air supply inlet 316 connecting with the fresh-keeping container air supply channel 211 is formed in a region of a rear portion of the container body top wall 311 close to the container body rear wall 313. A region of the container body top wall 311 where the container body air supply inlet 316 is located can be set to have a certain inclination angle to cooperate with the fresh-keeping container air supply channel 211. The container body return air inlet 317 is disposed on a lateral side of the container body air supply inlet 316 and is disposed at an interval from the container body air supply inlet 316. In some embodiments, the container body return air inlet 317 can be in communication with a space of the refrigeration storage compartment 121 outside the fresh-keeping storage container, or the container body return air inlet 317 can be in communication with a return air region of an evaporator chamber. An airflow that has undergone heat exchange in the fresh-keeping storage container can be sent back to a return air region of the refrigeration storage compartment 121 through the container body return air inlet 317, and an airflow circulation is completed using a return air passage from the refrigeration storage compartment 121 to an evaporator cavity of the refrigerator 10. Alternatively, the refrigerator 10 can provide a fresh-keeping container return air channel 213 in communication with the container body return air inlet 317 to directly send the airflow that has undergone heat exchange in the fresh-keeping storage container 30 back to the evaporator cavity. The fresh-keeping storage container can preferentially adopt a structure where the fresh-keeping container return air channel 213 is in communication with the container body return air inlet 317 and the evaporator chamber, achieving an independent air supply refrigeration for the fresh-keeping storage container 30.

An inclination direction of a region of the container body top wall 311 where the container body air supply inlet 316 and the container body return air inlet 317 are located is inclined from a top toward a bottom along a front-to-rear direction of the container body 310, and this inclination method makes an assembly of the fresh-keeping storage container 30 with the refrigerator 10 more convenient. Moreover, an air intake at the container body air supply inlet 316 is smoother.

A necessary condition for the fresh-keeping storage container 30 to achieve long-term fresh-keeping storage is to maintain a temperature in the fresh-keeping storage space 330 in a set fresh-keeping temperature range, and a refrigeration process will not result in excessively low or high temperatures, and especially temperatures in various regions of the fresh-keeping storage space 330 are uniform. In some embodiments, the fresh-keeping temperature range is set at -2°C to 1°C, for example, -2°C to 0°C. The stored items can not only avoid being frozen, but also maintain the most suitable fresh-keeping temperature. Those skilled in the art can set the fresh-keeping temperature range according to the specific state of the stored items, and the above specific numerical range is only for illustrative purposes.

However, a temperature of the cooling airflow supplied from the evaporator chamber of the refrigerator 10 is generally relatively low, possibly below minus ten degrees Celsius. A direct contact between the cooling airflow and the stored items would obviously cause the stored items to be overcooled, resulting in a freezing or a tissue damage, and affecting a fresh-keeping storage effect. Additionally, the cooling airflow cannot uniformly flow through an entire storage space, which would cause an uneven temperature in the fresh-keeping storage space 330 and also lead to a deterioration of the fresh-keeping storage effect. The fresh-keeping storage container 30 optimizes an internal air passage structure to prevent the cooling airflow from entering the fresh-keeping storage space 330 and contacting the stored items, and can ensure a stable and uniform internal temperature in the fresh-keeping storage space 330.

FIG. 30 is a cross-sectional view of the fresh-keeping storage container 30 shown in FIG. 27 along the A-A direction, and the direction of the arrows in Fig. 30 indicates a direction of the internal air flow of the fresh-keeping storage container 30.

The internal air passage of the fresh-keeping storage container 30 is configured as follows: an airflow enters a rear end of an air supply section 341 (also can be referred to as a top wall air passage section) of an internal air passage of the fresh-keeping storage container 30 defined in the container body top wall 311 through the container body air supply inlet 316, and then the airflow flows through the air supply section 341 from a rear to a front. At a front end of the air supply section 341, the airflow enters a top end of an air passage section 342 (also can be referred to as an end plate air passage section) of the internal air passage of the fresh-keeping storage container 30 defined in the drawer end plate assembly 321, and then the airflow flows through the air passage section 342 from a top to a bottom. At a bottom end of the air passage section 342, the airflow enters a gap between the drawer bottom plate 322 and the container body bottom wall 312, the gap serves as a cooling transmission section 343 (also can be referred to as a bottom wall air passage section) of the internal air passage of the fresh-keeping storage container 30, and then the airflow flows through the cooling transmission section 343 from a front to a rear. At a connection position between a rear end of the drawer bottom plate 322 and the drawer rear plate 323 (i.e., a rear end of the cooling transmission section 343), the airflow enters a gap between the drawer rear plate 322 and the container body rear wall 313, the gap can serve as an intra-container return air section 344 (also can be referred to as a rear wall air passage section). The inner container body return air inlet 346 is formed in a middle portion of the container body rear wall 313, and an inter-container return air section 345 is formed between the inner container body return air inlet 346 and the container body return air inlet 317 in the container body rear wall 313. The airflow finally reaches the container body return air inlet 317 from the inner container body return air inlet 346 via the inter-container return air section 345.

The above-described internal air passage of the fresh-keeping storage container 30 surrounds the entire fresh-keeping storage container 30 once, and can achieve a sufficient heat exchange without entering the fresh-keeping storage space 330 and thus without directly contacting the stored items, thereby uniformly cooling the fresh-keeping storage container 30.

In addition, the above-described internal air passage of the fresh-keeping storage container 30 is also suitable for temperature characteristics of the cooling airflow. During a flow process, the cooling airflow gradually exchanges heat and its own temperature gradually increases. An airflow temperature in the air supply section 341 is the lowest, and the air supply section 341 is formed inside a sandwich layer of the container body top wall 311, with a cooling being conducted downward from the container body top wall 311. The stored items are relatively far from the container body top wall 311, resulting in a poorest heat transfer efficiency. And in the air passage section 342, a heat transfer efficiency of the drawer end plate assembly 321 is also weaker than a heat transfer efficiency of the drawer bottom plate 322. The gap between the drawer bottom plate 322 and the container body bottom wall 312 serves as the cooling transmission section 343, where the cooling exchanges heat with the drawer bottom plate 322, achieving a highest heat transfer efficiency. That is to say, as the airflow temperature increases, the heat transfer efficiency of each air passage section relatively improves, which makes temperatures at various positions in the fresh-keeping storage space 330 substantially equivalent. The present embodiment achieves an independent surrounding air supply method in the sealed fresh-keeping storage container 30, and ensures temperature conditions required for the fresh-keeping storage.

In other optional embodiments, the internal air passage of the fresh-keeping storage container 30 can adopt other surrounding methods, for example, from a left side to a front, from a front portion of the drawer laterally to a right, and then returning from a right side to a rear side, that is, surrounding the fresh-keeping storage container 30 laterally. In comparison, the internal air passage of the previous embodiment that surrounds the fresh-keeping storage container 30 longitudinally has a better refrigeration effect.

In order to improve a refrigeration efficiency, an existing refrigerator for refrigerating a sealed drawer generally needs to send the cooling airflow into a space in the drawer, and even to avoid a direct blowing causing a local overcooling, a technical means generally adopted includes using a hole with a smaller aperture to supply air into the drawer or providing a dedicated air guide channel inside the drawer. The fresh-keeping storage container 30 of the present embodiment creatively proposes a solution where the cooling airflow is not sent into the fresh-keeping storage space 330 but uses a surrounding air passage to achieve an indirect refrigeration. It better combines the magnetic field to improve the fresh-keeping effect and overcomes the existing technical prejudice of those skilled in the art.

The container body 310 of the fresh-keeping storage container 30 in this embodiment comprises the container outer shell 3101 and the inner container body 318 disposed inside the container outer shell 3101. The container outer shell 3101 serves as an outermost layer of the fresh-keeping storage container 30, and a part of the container outer shell 3101 can utilize a cavity structural component in the refrigeration storage compartment 121. For example, when the fresh-keeping storage container 30 is disposed at a bottom of the refrigeration storage compartment 121, a bottom plate of the container outer shell 3101 can use a bottom wall of the refrigeration storage compartment 121. Additionally, a top plate of the container outer shell 3101 can extend laterally to serve as a top plate for the other drawer-type storage containers 122 arranged laterally side by side with the fresh-keeping storage container 30. The inner container body 318 can be assembled from a plurality of inner container components through a clipping or other connection methods. For example, the inner container components can be divided into three to four inner container components according to an assembly convenience requirement. The inner container body serves as a container body portion for arranging the drawer.

FIG. 30 shows the construction of the air supply section 341 in the fresh-keeping storage container 30. The first magnetic conductive plate 413 forms a complete continuous surface, which can serve as a lower wall surface of the air supply section 341. A top plate of the container outer shell and the first magnetic conductive plate 413 form a top sandwich layer of the container body. A top insulation layer 3111 is arranged in the top sandwich layer of the container body. An above-described shape of the air supply section 341 is constructed using the top insulation layer 3111. For example, the top insulation layer 3111 is provided with an air duct that gradually widens from the container body air supply inlet 316 along an air supply direction from a rear to a front toward two sides. That is, a lateral width of a rear end of the air supply section 341 is substantially consistent with the container body air supply inlet 316; a lateral width of a front end of the air supply section 341 is only slightly smaller than an overall width of the storage container 30. Lateral sides of the air supply section 341 form continuous and gentle air guide surfaces. In a planar region of the air supply section 341, the top insulation layer 3111 forms one or more flow dividing ribs 3112, 3113, 3114, and the cooling airflow is further divided into a plurality of streams using the flow dividing ribs 3112, 3113, 3114, so that the airflow uniformly flows through the container body top wall 311, ensuring a uniform temperature in a top space of the fresh-keeping storage container 30. Rear ends of the flow dividing ribs 3112, 3113, 3114 respectively face the container body air supply inlet 316, and then extend according to an overall shape of the air supply section 341. The flow dividing ribs 3112, 3113, 3114 divide the air supply section 341 into a plurality of airflow channels, and are configured so that an airflow flowing through each airflow channel is substantially equivalent. Openings of the airflow channels facing the container body air supply inlet 316 are configured to different sizes according to airflow velocities. For example, an airflow channel close to a center directly facing the container body air supply inlet 316 is narrower, while an airflow channel close to two sides is wider, and airflow magnitudes in different airflow channels are adjusted by adjusting sizes of entrances of the different airflow channels. Extension lengths and extension directions of the flow dividing ribs 3112, 3113, 3114 can be distributed according to airflow distribution needs.

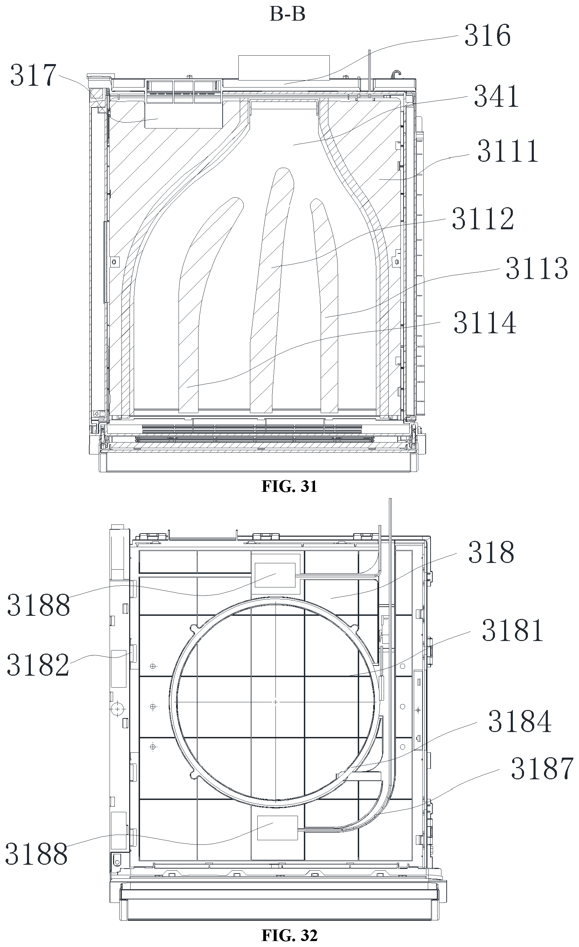

FIG. 31 shows an embodiment in which three flow dividing ribs 3112, 3113, and 3114 are provided. A person skilled in the art can adjust a number and extension directions of the flow dividing ribs as needed to ensure that the cooling airflow can uniformly pass through the container body top wall. Among three flow dividing ribs 3112, 3113, 3114, a flow dividing rib 3112 centrally facing the container body air supply inlet 316 has a longest length facing the container body air supply inlet 316, first dividing the airflow into a left airstream and a right airstream, and then further dividing the airflow using two flow dividing ribs 3113, 3114 on two sides. That is, one end of each of a first flow dividing rib 3112, a second flow dividing rib 3113, and a third flow dividing rib 3114 respectively faces the container body air supply inlet 316 and extends respectively toward a direction of the drawer end plate assembly. The first flow dividing rib 3112 directly faces the container body air supply inlet 316, and the second flow dividing rib 3113 and the third flow dividing rib 3114 are respectively located on lateral sides of the first flow dividing rib 3112. Wherein an end of the first flow dividing rib 3112 facing the container body air supply inlet 316 is closer to the container body air supply inlet 316 compared to ends of the second flow dividing rib 3113 and the third flow dividing rib 3114 facing the container body air supply inlet 316. That is, the cooling airflow is first diverted by the first flow dividing rib 3112, and then further diverted by the second flow dividing rib 3113 and the third flow dividing rib 3114.

FIG. 32 is a schematic view of the top of the inner container body 318 below the first magnetic source plate 414 in the fresh-keeping storage container 30 according to an embodiment of the present application, and FIGS. 33-34 are schematic views of the top of the inner container body 318 shown in FIG. 32 from two different angles. The inner container body 318 can be made of a plastic or other material, and a top surface of the inner container body 318 is provided with a protrusion 3181, the protrusion 3181 can be a plurality of ribs arranged longitudinally and laterally or convex points arranged in an array, and the protrusion 3181 is used to abut against the first magnetic source plate 414, reducing a contact between the first magnetic source plate 414 and the inner container body 318. That is, the protrusion 3181 on the top surface of the inner container body 318 is used to contact the first magnetic source plate 414, so that the first magnetic source plate 414 makes a point contact or a line contact with the inner container body 318, reducing a local excessively low temperature caused by the first magnetic source plate 414 directly transferring heat to the inner container body 318. The protrusion 3181 on the top surface of the inner container body 318 is used to form an air gap between the first magnetic source plate 414 and the inner container body 318.

In an embodiment using a plurality of ribs 3181 arranged longitudinally and laterally to support the first magnetic source plate 414, the ribs 3181 divide the top surface of the inner container body 318 into a plurality of grids, and a size of the grids (i.e., an arrangement density of the ribs) is set according to a support requirement for the first magnetic source plate 414 and a thermal insulation effect of the air gap. That is, an arrangement of the ribs 3181 on the top surface of the inner container body 318 needs to simultaneously consider the support requirement for the first magnetic source plate 414 and the thermal insulation effect of the air gap.

As described earlier, after the first magnetic conductive plate 413 and the first magnetic source plate 414 are fitted, the two are required to fit tightly, achieving a zero-gap fitting. Relying solely on a magnetic attraction of the first magnetic source plate 414 to the first magnetic conductive plate 413, achieving the above tight fitting is not completely reliable. A traditional means for solving this problem is to use a support plate for support. And the fresh-keeping storage container 30 of the present embodiment. However, based on a consideration of a fresh-keeping temperature balance, the fresh-keeping storage container 30 of this embodiment creatively proposes to use ribs 3181 arranged vertically and horizontally for support, which on the one hand achieves reliable support, and on the other hand realizes uniform cooling by using air gaps.

A height of the protrusion (rib) 3181 on the top surface of the inner container body 318 can be set according to an air gap size that satisfies a uniform refrigeration requirement, and can generally be set to 1-3mm, using a relatively small space occupation to satisfy a refrigeration requirement.

The present embodiment creatively recognizes that a temperature of a cold air just entering the container body 310 is very low, and to address a problem of a local excessive overcooling caused by the cold air conducting a cooling to the fresh-keeping storage space 330, the first magnetic field assembly 411 and a thermal insulation layer (an air gap) are disposed between the air supply section 341 and the inner container body 318, so that the cooling from the cold air is conducted to the fresh-keeping storage space 330 via the first magnetic field assembly 411 (the first magnetic source plate 414 also has a certain thermal insulation effect), the thermal insulation layer (the air gap), and a top wall of the inner container body 318, thereby enabling a transfer of an appropriate amount of the cooling to the fresh-keeping storage space 330, and helping to maintain a suitable storage temperature in the entire fresh-keeping storage space 330, which helps maintain a suitable storage temperature in the entire fresh-keeping storage space 330 and effectively avoids the problem of local excessive cooling in the fresh-keeping storage space 330.

In addition to the air gap, in the solution of this embodiment, thermal insulation boards (such as foam boards, vacuum insulation panels, etc.) and cold storage materials can also be used to achieve the thermal insulation function.

A plurality of claws 3182 are disposed on lateral sides of the top surface of the inner container body 318. The claws 3182 are used to clip the extension portions 4131 of the first magnetic conductive plate 413, pressing the first magnetic conductive plate 413 and the first magnetic source plate 414 flatly onto the top surface of the inner container body 318. This ensures that the first magnetic field assembly 411 is fixed to the inner container body 318 stably and reliably.

In some embodiments, a protrusion height of a protruding section of the extension portions 4131 can be greater than a thickness of the first magnetic source plate 414, which can provide a space for the protrusion 3181 to support the first magnetic source plate 414. Meanwhile, the protruding section of the extension portions 4131 can better cooperate with the claws 3182.

In other embodiments, a protrusion height of the protruding section of the extension portions 4131 can be substantially the same as a thickness of the first magnetic source plate 414, so that a bottom surface of the first magnetic field assembly 411 is substantially flush.

In an embodiment where the first magnetic field assembly 411 is provided with the first electromagnetic coil 415, a coil accommodating groove 3184 for placing the first electromagnetic coil 415 also can be provided on the top surface of the inner container body 318. A shape of the coil accommodating groove 3184 is adapted to an outer shape of the first electromagnetic coil 415, and a groove depth of the coil accommodating groove 3184 is adapted to a thickness of the first electromagnetic coil 415, ensuring that the first electromagnetic coil 415 can reliably abut against the first magnetic source plate 414.

One or more sensor accommodating portions 3185, light accommodating portions 3186, cable accommodating grooves 3187, and the like can also be provided on the top surface of the inner container body 318. The sensor accommodating portions and the light accommodating portions can protrude into the fresh-keeping storage space 330. The sensor accommodating portions 3185 are used to place a temperature sensor 3188, and their sizes and shapes are adapted to an outer shape of the temperature sensor 3188. In some embodiments, a plurality of (for example, two) the temperature sensors 3188 and the sensor accommodating portions 3185 can be provided to detect temperatures in different regions at a top of the fresh-keeping storage space 330. For example, the temperature sensors 3188 can be disposed at intervals along a flow direction of the cooling airflow to respectively detect temperature differences upstream and downstream of the cooling airflow. The temperature detected by the temperature sensors 3188 serves as a basis for controlling the refrigeration of the fresh-keeping storage container 30.

The light accommodating portion 3186 is used to place a light source, and its size and shape are adapted to the outer shape of the light source. The light source is used for illumination when the drawer 320 is pulled out.

The cable accommodating grooves 3187 are used to arrange various cables for the above-mentioned temperature sensors 3188 and a light source, such as power cables and signal cables. The cable accommodating groove 3187 leads the above-mentioned various cables to the outside of the fresh-keeping storage container 30.

A surface of a top surface of the inner container body 318 facing an interior of the fresh-keeping storage space 330 is a complete surface, and the cooling airflow in the air supply section 341 will not leak into an interior of the inner container body 318, thereby helping to ensure a stable temperature decrease in the fresh-keeping storage space 330.

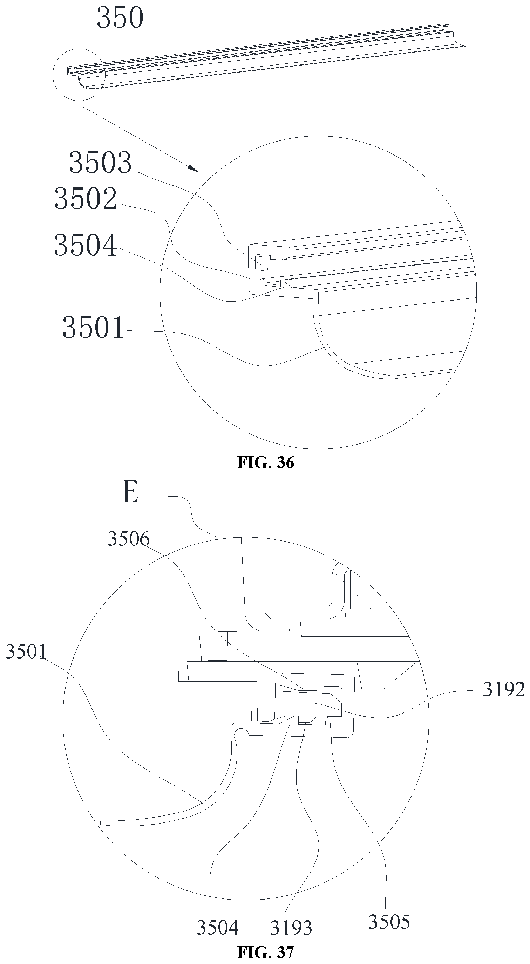

FIG. 35 is a schematic view of an air guide frame 319 on the top wall of the inner container body 318 in the fresh-keeping storage container 30 according to an embodiment of the present application. FIG. 36 is a schematic view of a wind deflector 350 at the air guide frame 319 shown in FIG. 35. FIG. 37 is a partial enlarged view of position E in FIG. 30, which shows the matching area between the wind deflector 350 and the air guide frame 319.

An air guide frame 319 is provided at a front end of a top wall of the inner container body 318, and the air guide frame 319 defines a front end air passage opening 3191 of the air supply section 341. The air guide frame 319 extends upward from the front end of the top wall of the inner container body 318, and the air guide frame 319 forms a plurality of air passage openings 3191 to discharge an airflow after passing through the air supply section 341.

The air guide frame 319 can be provided with a clipping structure such as a clip or a clip hole above the air passage openings 3191, and the air guide frame 319 clips with a front end of the container outer shell through the above clipping structure, so as to realize the fixed connection between the inner container body 318 and the container outer shell.

The air guide frame 319 can be provided with a wind deflector connecting portion 3192 below the air passage openings 3191, and the wind deflector connecting portion 3192 is used to connect a wind deflector 350 below the inner container body 318. In some embodiments, the wind deflector connecting portion 3192 can be configured as a connecting bar protruding rearward along a lateral direction. Upper and lower surfaces of the connecting bar can respectively be provided with a clip bar 3193, and there can be one or more bars 3193.

The wind deflector 350 comprises a wind deflector main body 3501 and a clipping groove portion 3502, where the clipping groove portion 3502 is located at an upper portion of the wind deflector 350, forming a clipping groove 3503 with an opening facing forward. The clipping groove 3503 is used to clip into the wind deflector connecting portion 3192 and is provided with a clipping structure cooperating with the clip bar 3193. The shape of the clipping groove 3503 is adapted to the outer shape of the connecting strip.

The wind deflector main body 3501 extends obliquely downward from a front end of a lower groove wall of the clipping groove portion 3502, and an extension length is required so that when the drawer 320 is in a state inside the container body 310, a front end of the wind deflector main body 3501 can contact a rear portion of the drawer end plate assembly 321, thereby enabling an airflow passing through the air passage openings 3191 of the air guide frame 319 to enter an air passage section 342 defined in the drawer end plate assembly 321. That is, the wind deflector main body 3501 blocks a gap between a top of the container body 310 and the drawer end plate assembly 321, preventing the airflow from entering the fresh-keeping storage space 330 through the gap and affecting the uniform refrigeration of the fresh-keeping storage space 330.

An extension length of the wind deflector main body 3501 along a front-rear direction is set according to a gap size between the top of the container body 310 and the drawer end plate assembly 321. Considering deformation and sealing effect, it can be set to be greater than or equal to 5mm and less than or equal to 15mm.

The clipping groove portion 3502 is made of a relatively hard material (such as ABS or similar materials) to firmly clip with the air guide frame 319 of the container body. The wind deflector main body 3501 is made of a relatively soft material (such as TPE (Thermo Plastic Elastomer), rubber, silica gel, etc.) to deform during a contact with the drawer end plate assembly 321 and achieve a better sealing. The wind deflector 350 can be manufactured by a two-shot injection molding process.

In this embodiment, the above wind deflector 350 adopts a clipping method where the clipping groove 3503 clips with the connecting bar, and an opening direction of the clipping groove 3503 is consistent with an opening direction of the container body 310. During a process of placing the drawer 320 into the container body 310, the wind deflector main body 3501 gradually contacts an end plate wind cover 3211 at a rear portion of the drawer end plate assembly 321, and the wind deflector main body 3501 receives a rearward pressure from the end plate wind cover 3211, so that when the wind deflector main body 3501 receives the pressure, the pressure can be transmitted to the clipping groove portion 3502, which in turn enables the clipping groove portion 3502 to offset a part of the pressure through a slight expansion deformation, thereby reducing a pressure burden at a connection between the clipping groove portion 3502 and the connecting bar, which is beneficial to improving the service life of the wind deflector 350. In addition, the above-mentioned clamping structure also facilitates replacement when the wind deflector ages.

A first protruding rib 3504 is provided on an inner side of a side wall of the clipping groove portion 3502 and the wind deflector main body 3501 of the wind deflector 350, and after the wind deflector 350 is installed on the air guide frame 319, the first protruding rib 3504 can cooperate with the clip bar 3193 at a bottom of the connecting bar on the air guide frame 319. The first protruding rib 3504 and the clip bar 3193 can be provided with mutually cooperating guide surfaces. That is, a front-facing side of the first protruding rib 3504 is formed with an inclined guide surface to facilitate an assembly of the wind deflector 350. That is, during an installation of the wind deflector 350, the guide surface is used to guide the clipping groove 3503. A rear-facing side of the first protruding rib 3504 serves as a stop surface, and after the first protruding rib 3504 and the clip bar 3193 are engaged, the stop surface can prevent the first protruding rib 3504 and the clip bar 3193 from sliding out after the assembly.

A second protruding rib 3505 can be provided at a rear side of the first protruding rib 3504 in the clipping groove portion 3502. After an assembly of the wind deflector is completed, the clip bar 3193 is located between the first protruding rib 3504 and the second protruding rib 3505. A top end of the second protruding rib 3505 has an arc shape and abuts against the connecting bar, thereby reinforcing a connection between the wind deflector 350 and the connecting bar. Protrusion heights of the first protruding rib 3504 and the second protruding rib 3505 are the same, being less than or equal to one quarter of a width of the clipping groove 3503 (a distance between two groove side walls).

A third protruding rib 3506 can be provided on a groove wall (a top groove wall) of the clipping groove 3503 opposite to the first protruding rib 3504 and the second protruding rib 3505, and a front surface of the third protruding rib 3506 can be provided with a guide surface cooperating with the connecting bar. The third protruding rib 3506, together with the first protruding rib 3504 and the second protruding rib 3505, tightly clips the connecting bar, achieving a reliable connection between the wind deflector 350 and the connecting bar while having a certain deformation space.

The wind deflector main body 3501 has a curved sheet shape. The wind deflector main body 3501 curves downward overall, that is, for an airflow, a wind-blocking surface is a concave surface. During a contact between the wind deflector 350 and the drawer end plate assembly 321, the wind deflector 350 gradually deforms. Using an above construction of the wind deflector 350, a deformation occurs at a position where the wind deflector main body 3501 connects with the clipping groove portion 3502 and at a middle portion of the wind deflector main body 3501. Using the above two deformation points can relieve a pressure on the wind deflector 350 and extend its service life. On the other hand, during a pressure deformation of the wind deflector 350, an overall shape of the wind-blocking surface can be maintained, thereby facilitating the smooth flow of air flow.

From a position where the wind deflector main body 3501 connects with the clipping groove portion 3502 toward a front, its curvature becomes progressively smaller. That is to say, a bending degree of the wind deflector main body 3501 becomes increasingly gentle, which helps to ensure the wind-shielding effect of the wind deflector 350.

A thickness of a middle section of the wind deflector main body 3501 is greater than thicknesses at two ends, thus making the two ends of the wind deflector main body 3501 more prone to deformation and reducing a feedback resistance of the wind deflector main body 3501, the user experience is improved. For example, a thickness of an end section of the wind deflector main body 3501 is 0.2 millimeters, while a thickness of the middle section is 1 millimeter.

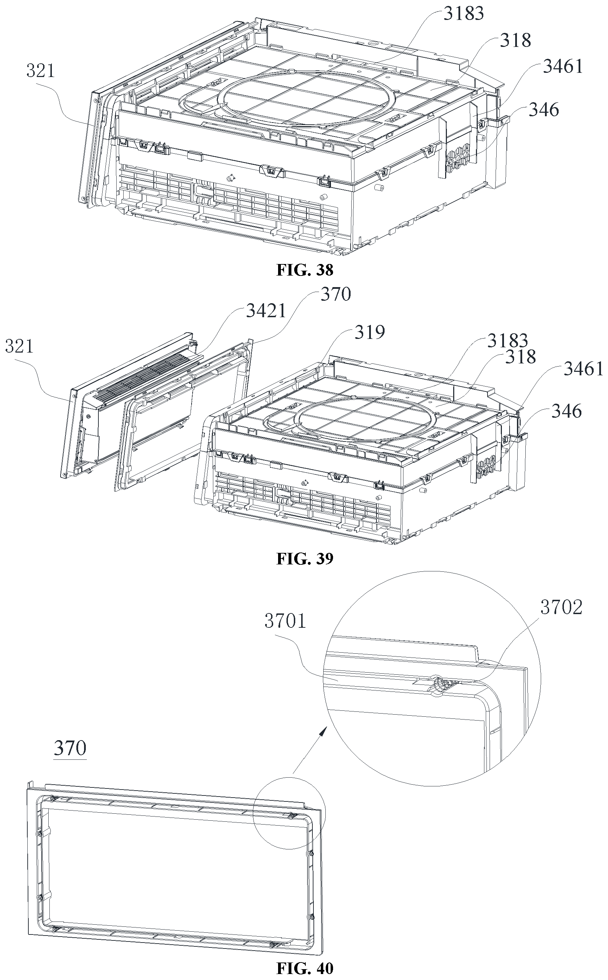

FIG. 38 is a schematic view of the matching relationship between the inner container body 318 and the drawer end plate assembly 321 in the fresh-keeping storage container 30 according to an embodiment of the present application. FIG. 39 is an exploded view of the components shown in FIG. 38.

An end plate mating member 370 is provided at a front portion of the container body 310, and the end plate mating member 370 can be integrally provided with the inner container body 318. In other embodiments, the end plate mating member 370 can be an independent end plate mating member 370. The end plate mating member 370 is arranged around a front opening of the container body 310. A clipping structure disposed at intervals along the front opening of the container body 310 on the end plate mating member 370 clips with the inner container body 318.

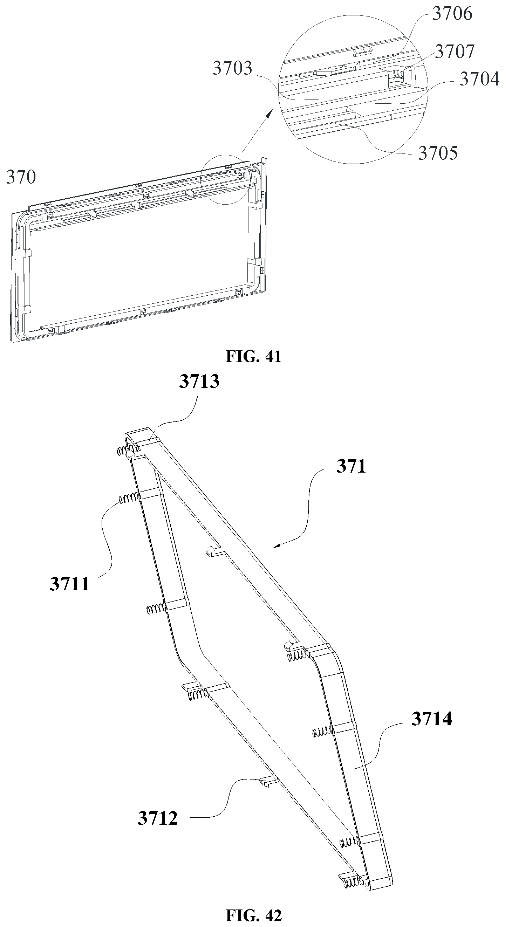

FIGS. 40 and 41 are schematic views of the end plate mating member 370 in the fresh-keeping storage container 30 according to an embodiment of the present application from two different perspectives, respectively, and FIG. 42 is a schematic view of the annular sealing strip 371 in the fresh-keeping storage container 30 according to an embodiment of the present application.

A sealing installation groove 3701 is provided on a front side of the end plate mating member 370 along a peripheral side of an opening of the container body 310, and a groove opening direction of the sealing installation groove 3701 faces forward to accommodate an annular sealing strip 371. A container body connecting bar 3706 protruding toward a side of the container body is also provided on a rear side of the end plate mating member 370 at an outer periphery of the sealing installation groove 3701. A plurality of clipping structures (for example, clipping holes) are disposed at intervals on the container body connecting bar to cooperate with a corresponding clipping structure (for example, claws) provided on the inner container body, thereby achieving a connection between the end plate mating member 370 and the inner container body 318.

The sealing installation groove 3701 forms a rearward protruding portion 3703 on a rear side of the end plate mating member 370, and below a top section of a protruding portion 373 formed by the sealing installation groove 3701, a transitional air duct 3704 connecting with the front air passage opening 3191 of the air guide frame 319 can be formed, and a lower end of the transitional air duct 3704 is used to communicate with a top air inlet 3421 of the air passage section 342. A transitional air duct outlet 3705 is formed on a lower surface of the transitional air duct 3704, which faces the top air inlet 3421 of the air passage section 342.

That is, using the transitional air duct 3704 of the end plate mating member 370, an airflow can be converted from a forward blowing to a downward blowing, that is, the transitional air duct 3704 serves as a region for an airflow direction turning. A bottom wall of the transitional air duct 3704 is formed by a portion of a groove wall of the sealing installation groove 3701, which saves the occupied space.

On the other hand, the transitional air duct 3704 is located below a top annular sealing strip 371, which can also avoid a direct contact with an exterior of the fresh-keeping storage container 30, and prevent occurrences such as a condensation. Since the air duct of the fresh-keeping storage container 30 of the present embodiment needs to pass through a joint portion between the container body 310 and the drawer 320, through an above construction of the end plate mating member 370, a cooling airflow can smoothly pass through a joint region between the container body 310 and the drawer 320. It features a compact structure with small space occupation, and at the same time avoids the occurrence of condensation and other situations.

The annular sealing strip 371 is at least partially disposed in the sealing installation groove 3701, and the annular sealing strip 371 is used to seal a gap between the drawer end plate assembly 321 and an opening of the container body 310. The sealing installation groove 3701 is provided with a plurality of elastic member accommodating portions 3702 at intervals. A plurality of elastic members 3711 (for example, can be springs or elastic airbags) are used to be disposed in the elastic member accommodating portions 3702. One end (a rear end) of the elastic member 3711 abuts against a groove bottom of the sealing installation groove 3701, and another end (a front end) of the elastic member 3711 is used to abut against a rear side of the annular sealing strip 371. During a process of pushing the drawer 320 into the container body 310, a rear side surface of the drawer end plate assembly 321 contacts a front side of the annular sealing strip 371, and then further compresses the annular sealing strip 371. Subsequently, the annular sealing strip 371 compresses the elastic member 3711, so that the elastic member 3711 forms a force pushing the annular sealing strip 371 toward the drawer end plate assembly 321. This makes a contact between the annular sealing strip 371 and the drawer end plate assembly 321 tighter, which helps the cooling airflow to enter a top end of the air passage section 342 defined in the drawer end plate assembly 321 from the air supply section 341, and achieve a surrounding of the cooling airflow.

The annular sealing strip 371 can be made of materials such as soft polyvinyl chloride (SPVC), silica gel, rubber, etc., which has a certain scalability. Two ends of the elastic member 3711 in a sealing direction respectively abut against the groove bottom of the sealing installation groove 3701 and the annular sealing strip 371, and the elastic members are distributed at intervals along a circumferential direction of the sealing installation groove 3701, thereby providing an elastic support and an expansion space at different positions. When forces at various positions of the annular sealing strip 371 are uneven, the elastic member 3711 can also balance the forces at the various positions of the annular sealing strip 371 through an adjustment of its own compression amount, achieving a consistent sealing performance of the annular sealing strip 371 along a circumferential direction of an opening of the container body.

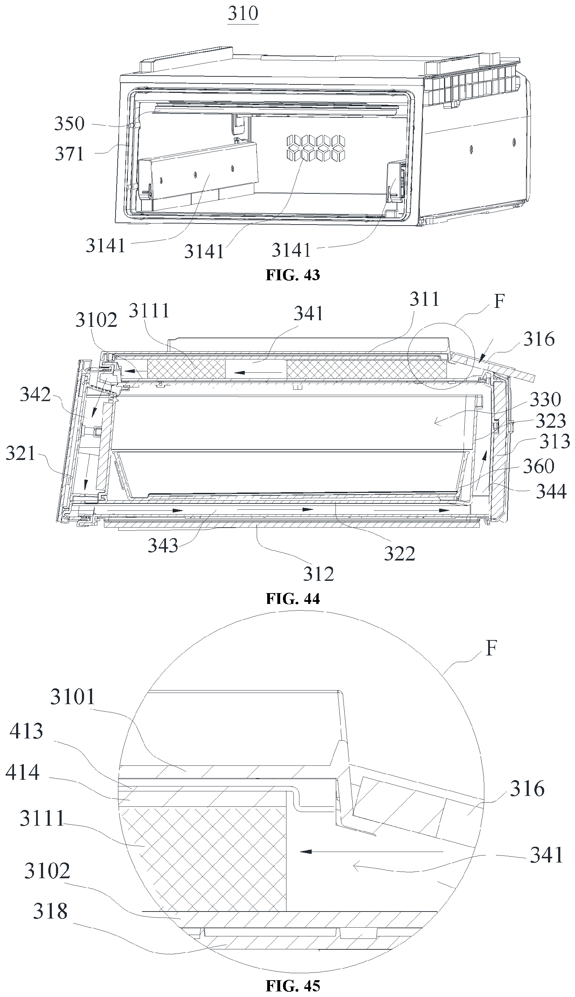

FIG. 43 is a schematic view of the interior of the container body 310 in the fresh-keeping storage container 30 according to an embodiment of the present application. The fresh-keeping storage container 30 of the present embodiment can adopt a push-to-open drawer, that is, push-to-open rails 3141 are provided on two sides inside the container body 310, and the drawer is installed on the push-to-open rails 3141. When it is necessary to pull open the drawer 320, the drawer 320 is first pushed slightly further inward, a locking member of the push-to-open rail 3141 disengages, and the drawer 320 is pushed outward by a certain distance using an elastic member such as a spring for a user to further pull out the drawer 320. When it is necessary to push in the drawer 320, the locking member of the push-to-open rail 3141 achieves a locking engagement, ensuring that the drawer 320 is placed in position. This push-to-open drawer does not require a handle to be provided on the drawer 320, facilitating user operation while ensuring sealing.

Particularly, for a push-to-open drawer, opening requires first compressing inward by a certain stroke before a push-open mechanism of the push-to-open rail 3141 can be released. Therefore, the annular sealing strip 371 can have a certain range of a front-rear movement relative to the end plate mating member 370, which strengthens a sealing while also facilitating an opening of a push-to-open storage component. Therefore, this makes it possible for a surrounding air duct to be applied to the push-to-open drawer.

The annular sealing strip 371 is further provided with a hook 3712 extending toward the end plate mating member 370 (extending backwards). A hook groove 3707 is formed on an inner wall of the sealing installation groove 3701. The hook 3712 can engage with the hook groove 3707 in an insertion direction of the annular sealing strip 371. When the annular sealing strip 371 moves in its front-rear directional space, the hook 3712 can also move freely in the hook groove 3707. And when a forward movement stroke of the annular sealing strip 371 exceeds a predetermined formation, the hook 3712 engages with the hook groove 3707, thereby limiting a position of the annular sealing strip 371 and preventing the annular sealing strip 371 from coming out of the sealing installation groove 3701. The annular sealing strip 371 can also be provided with a guide column 3713 extending toward an end plate mating portion 370 (extending backwards). The elastic members 3711 can be sleeved on the guide column 3713, thereby using the guide column 3713 to limit positions of the elastic members 3711. A sealing main body 3714 of the annular sealing strip 371 is mostly embedded in the sealing installation groove 3701, thereby realizing reliable sealing of the fresh-keeping storage container 30.

In other alternative embodiments of the present application, the air supply section 341 can be disposed between the first magnetic field assembly 411 and a top wall of the inner container body 318. That is, an air duct component 3111 is disposed between the first magnetic field assembly 411 and a side wall of the inner container body 318. The air supply section 341 is located below the first magnetic field assembly 411. FIG. 44 is a schematic view of the internal air duct of the fresh-keeping storage container 30 according to an embodiment of the present application, and FIG. 45 is a partial enlarged view of position F in FIG. 44.

The air supply section 341 is formed between the first magnetic field assembly 411 and a side wall of the inner container body 318. The air supply section 341 is closer to the inner container body 318. During a refrigeration, a cooling of the fresh-keeping storage space 330 can be achieved more quickly. If the first magnetic field assembly 411 generates heat during a magnetic field generation, an airflow flowing through the air supply section 341 can also carry away a heat from the first magnetic field assembly 411, reducing an effect of a heat generation from the first magnetic field assembly 411 on a temperature distribution in the fresh-keeping storage space 330. The air duct component 3111 is disposed below the first magnetic field assembly 411 and is configured to define the air supply section 341. To prevent the fresh-keeping storage space 330 from being close to the air supply section 341, an insulation layer 3102 can be disposed between the air duct component 3111 and the inner container body 318 in the air supply section 341, and the insulation layer 3102 can be disposed below the air supply section 341. The insulation layer 3102 can be made of thermal insulation foam material, with a thickness ranging from 5mm to 10mm. For another example, the insulation layer 3102 is made of a vacuum insulation panel, with a thickness ranging from 2mm to 5mm. Setting the corresponding thickness range according to the material of the insulation layer 3102 can not only ensure the cooling rate, but also avoid local excessive low temperature. In other embodiments, if the temperature of the refrigeration airflow is relatively high (for example, above -7°C), PE (polyethylene) or an air layer can also be selected as the insulation layer 3102.

Alternatively, the above-mentioned insulation layer 3102 can be replaced by a cold storage component. A cold storage component is disposed between the air supply section 341 and a side wall of the inner container body 318, and a cold storage assembly can store a cooling when a supply and return air duct is ventilating, and release the cooling to the fresh-keeping storage space 330 through the side wall of the inner container body 318 when a ventilation stops.

The air supply section 341 is close to a side wall of the inner container body 318, which can make a cooling speed of the inner container body 318 faster. Using the cold storage assembly can better reduce temperature fluctuations in the fresh-keeping storage space 330, and when a refrigeration stops, an internal temperature of the fresh-keeping storage container 30 rises more slowly and remains more stable.

Those skilled in the art can choose to arrange the air supply section 341 above or below the first magnetic field assembly 411 according to the refrigeration requirements and the structure of the container body of the fresh-keeping storage container 30.

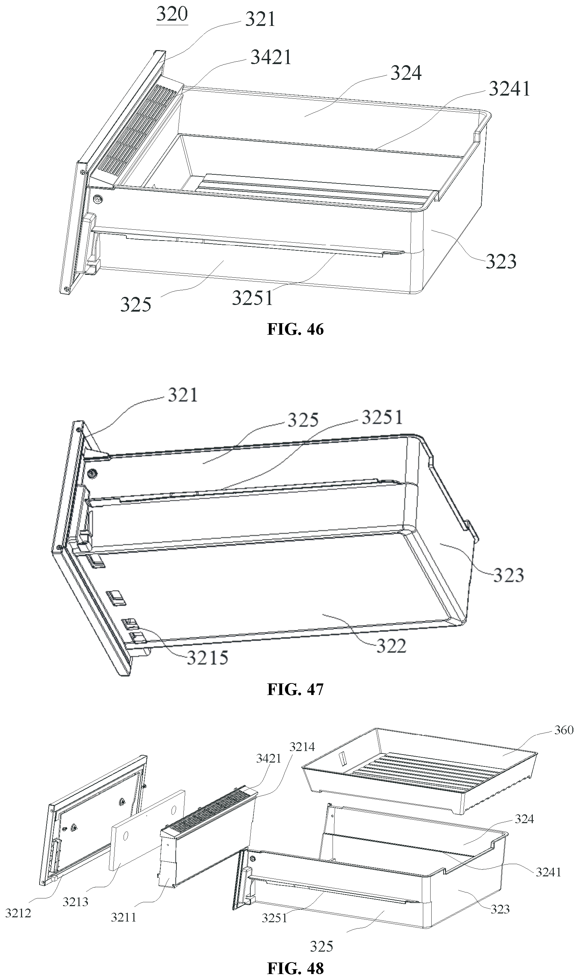

FIG. 46 is a schematic view of the drawer 320 in the fresh-keeping storage container 30 according to an embodiment of the present application from one perspective; FIG. 47 is a schematic view of the drawer 320 in the fresh-keeping storage container 30 according to an embodiment of the present application from another perspective; FIG. 48 is an exploded view of the components of the drawer 320 in the fresh-keeping storage container 30 according to an embodiment of the present application.

The drawer 320 comprises a storage main body formed by the drawer bottom plate 322, the drawer rear plate 323, the drawer left side plate 324, and the drawer right side plate 325, the drawer end plate assembly 321 located in front of the storage main body, and a storage tray 360 placed inside the storage main body. Outer surfaces of the drawer left side plate 324 and the drawer right side plate 325 respectively form a connecting plate 3251 for connecting with the push-to-open rails 3141, thereby sliding relative to the container body 310 along an extension and a retraction of the rails.

The drawer end plate assembly 321 is provided with an end plate main body 3212, the end plate wind cover 3211, and an end plate thermal insulation member 3213 located between the end plate wind cover 3211 and the end plate main body 3212. The end plate main body 3212 is flat-shaped, and includes a base plate, decorative strips located around the base plate, and a panel located on the front side of the base plate. The base plate serves as a basic component for connecting other parts of the drawer end plate assembly, and the decorative strips are fastened to the outer periphery of the base plate. The panel can be glass or other thin plates with an exterior design, serving as the exterior component of the drawer. There can be a gap between the base plate and the panel, so that the air in the gap can be used for heat insulation, reducing the loss of cooling capacity of the refrigeration airflow to the outside through the drawer end plate assembly 321.

The end plate wind cover 3211 is disposed on an inner side (a rear section) of the end plate main body 3212, and the end plate wind cover 3211 and the end plate main body 3212 define an air duct space, and the end plate thermal insulation member 3213 is disposed on a front side of the end plate wind cover 3211, that is, the end plate thermal insulation member 3213 is located on a rear side of the air duct space. The air duct space between the end plate thermal insulation member 3213 and the end plate main body 3212 forms the air passage section 342.

The end plate wind cover 3211 protrudes from the end plate main body 3212 into the fresh-keeping storage space 330, and a left side wall, a right side wall, and a bottom side wall of the end plate wind cover 3211 respectively connect with the drawer left side plate 324, the drawer right side plate 325, and the drawer bottom plate 322. A top wall of the end plate wind cover 3211 is provided with the top air inlet 3421 facing a lower end of the transitional air duct 3704, and to prevent a foreign object from entering the air passage section 342, an air inlet grille can be provided at the top air inlet 3421.

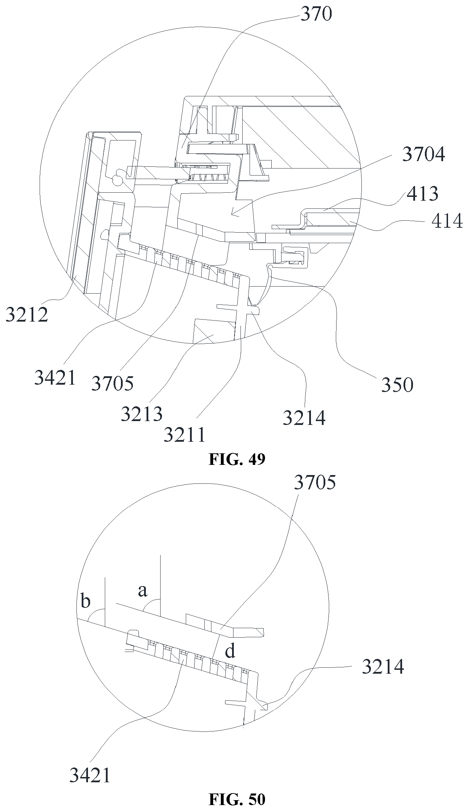

FIG. 49 is a partial enlarged cross-sectional view of the matching position between the top of the drawer end plate assembly 321 and the top of the front end of the container body 310 in the fresh-keeping storage container 30 according to an embodiment of the present application; FIG. 50 is a schematic view of the matching relationship between the top wall of the drawer end plate assembly 321 and the bottom wall of the transition air duct 3704 in the fresh-keeping storage container 30 according to an embodiment of the present application.

A bottom wall of the transitional air duct 3704 (a surface where an outlet of the transitional air duct 3704 is located) and a top wall of the end plate wind cover 3211 (a surface where the top air inlet 3421 of the end plate wind cover 3211 is located) are respectively disposed with an inclination. An inclination method is a downward inclination from a front to a rear. That is to say, from an overall view of the fresh-keeping storage container 30, inclination directions of a plane where the bottom wall of the transitional air duct 3704 is located and a plane where the top wall of the end plate wind cover 3211 is located are consistent, that is, both incline toward a bottom of the fresh-keeping storage container 30 along a front-to-rear direction of the fresh-keeping storage container 30.

A range of values for an angle between a top wall of the end plate wind cover 3211 (a surface where the top air inlet 3421 of the end plate wind cover 3211 is located) and a vertical direction is greater than or equal to 10 degrees and less than or equal to 80 degrees. A range of values for an angle between a plane where a lower end of the transitional air duct 3704 is located and a vertical direction can be set to be greater than or equal to 10 degrees and less than or equal to 80 degrees. The top wall of the end plate wind cover 3211 and a plane where the lower end of the transitional air duct 3704 is located can be arranged in parallel and a distance can be set to be greater than or equal to 3 millimeters and less than or equal to 20 millimeters. The distance can avoid a serious air leakage caused by an excessive distance and is also beneficial for avoiding a friction between the end plate wind cover 3211 and the container body 310 during a sliding process of the drawer 320. A flow path of the cooling airflow overall presents a parabolic form rather than a vertical angle, making a flow of the cooling airflow from the end plate wind cover 3211 to the lower end of the transitional air duct 3704 smoother, thereby helping to reduce wind loss and effectively avoid cold energy concentration. In addition, the end plate of the end plate wind cover 3211 is an inclined surface, which also helps reduce the probability of foreign objects falling into the air passage section 342.

An inclined arrangement of the bottom wall of the transitional air duct 3704 can make a flow path of a cooling airflow entering the air passage section 342 during a process of exiting an outlet of the transitional air duct 3705 overall present a parabolic form, thereby making the cooling airflow in a joint region between the drawer 320 and the container body 310 smoother, which is beneficial to reducing wind resistance and air leakage.

In addition, when the refrigerator user takes and places the stored items in the drawer 320 from above, from the user's perspective, the above-mentioned inclination can visually thin the drawer end plate assembly 321, thereby providing the user with a better use experience, thereby avoiding user complaints about the air passage section 342 occupying space in the front-rear direction.

In some embodiments, an angle between a plane where the bottom wall of the transitional air duct 3704 is located and a vertical direction, namely an angle a, can have a design value range of greater than or equal to 60 degrees and less than or equal to 75 degrees. For example, it can be 60 degrees, 62 degrees, 64 degrees, 70 degrees, 72 degrees, or 75 degrees.

Correspondingly, An angle between a plane where the top wall of the end plate wind cover 3211 is located and a vertical direction, namely an angle b, that is, a design value range of the angle b can be greater than or equal to 60 degrees and less than or equal to 75 degrees. For example, it can be 60 degrees, 62 degrees, 64 degrees, 70 degrees, 72 degrees, or 75 degrees. Angle a and angle b can be set to be the same.

A distance d from an outlet of the transitional air duct 3704 to the top air inlet 3421 of the end plate wind cover 3211 can be set to be greater than or equal to 3 millimeters and less than or equal to 20 millimeters. For example, it can be 10mm, 12mm, 14mm, 16mm, 18mm, 20mm, etc. This not only ensures that there is no structural interference between the drawer and the container body, but also prevents air leakage caused by an excessive distance.

An area of the top air inlet 3421 of the end plate wind cover 3211 can be greater than an area of an outlet of the transitional air duct 3704, facilitating a smooth entry of a cooling airflow into the air passage section 342.

An upper portion of a rear wall of the end plate wind cover 3211, that is, a position close to the top air inlet 3421 of the end plate wind cover 3211, is provided with a boss 3214 arranged laterally. A top surface position of the boss 3214 when the drawer 320 is in a closed position is higher than or flush with a position where a lowest end of the wind deflector main body 3501 of the wind deflector 350 is located in a natural state. That is, when the wind deflector main body 3501 is not in contact with the drawer end plate assembly 321, a front end of the wind deflector main body 3501 is slightly higher than a top edge of the boss 3214. As the drawer 320 is pushed back, the wind deflector main body 3501 abuts against a top of the boss 3214 or a position close to the top of the boss 3214. After the wind deflector main body 3501 is abutted and deforms by bending, a portion of the wind deflector main body 3501 contacts a surface of the end plate wind cover 3211 and a portion contacts a top surface of the boss 3214, thereby jointly forming a cavity with the above angular surfaces, which is beneficial for improving a sealing effect.

In some embodiments, an end plate air guide rib (not shown) can be provided between the end plate thermal insulation member 3213 and the end plate main body 3212, and the air passage section 342 is divided into a plurality of air ducts using the end plate air guide rib, thereby ensuring that a cooling airflow can uniformly pass through the air passage section 342. The end plate thermal insulation member 3213 can prevent the cooling airflow from rapidly conducting a cooling to a front portion of the fresh-keeping storage space 330, and can avoid an overcooling in a front region of the fresh-keeping storage space 330.

The end plate air guide rib constitutes at least two air guide surfaces, and the two air guide surfaces are distributed left and right in the air passage section 342. An air guide surface located on a left side inclines from a left side of the air passage section 342 toward a right side and from a bottom end toward a top end, and an air guide surface located on a right side inclines from a right side of the air passage section 342 toward a left side and from a bottom end toward a top end. When a cooling airflow enters from a top of the air passage section 342 and encounters the two air guide surfaces, the cooling airflow can diffuse toward a left side of an air passage duct along one air guide surface and toward a right side of the air passage duct along another air guide surface. That is, the cooling airflow entering the air passage duct is made to diffuse toward left and right sides of the air passage section 342, thereby making a distribution of the cooling airflow in the air passage section 342 more uniform, and further making a distribution of a cooling airflow flowing out of the air passage section 342 at a bottom of the drawer 320 more uniform.

A bottom side wall of the end plate wind cover 3211 is provided with a bottom outlet, and a position on the drawer bottom plate opposite to the bottom outlet of the end plate wind cover 3211 is provided with an inlet of the cooling transmission section 343. The bottom outlet of the end plate wind cover 3211 and the inlet of the cooling transmission section 343 provided on the drawer bottom plate can be separated by a separating strip, thereby forming a plurality of corresponding openings. In some embodiments, an air guide member can be provided below the inlet of the cooling transmission section 343 to make a direction-changing process of a cooling airflow from downward to rearward smoother.

The air guide member has an air guide surface. During a use of the drawer 320, a cooling airflow flows through the air passage section 342 and flows out from a bottom of the air passage section 342, and an air guide surface of an air guiding device gradually guides the cooling airflow downward and rearward, thereby making a flow direction of the cooling airflow gradually change from longitudinal to lateral, and finally flow toward a rear of the drawer 320. Therefore, the air guide surface can guide the refrigeration airflow, gradually change its flow direction, and avoid the refrigeration airflow from directly turning at a vertical angle on the bottom side of the air passage section 342. This makes the flow of the refrigeration airflow smoother, preventing the airflow from accumulating at the front end of the drawer 320 and generating turbulence. The air guide surface extends along a front-rear direction of the drawer 320, with one end located in front of an outlet of the air passage section 342 and another end extending toward a rear of the drawer 320 and gradually transitioning downward with a bending. The air guide surface can be formed as a curved surface with a concave side facing obliquely upward.

The cooling transmission section 343 is formed between the drawer bottom plate and an inner container body bottom wall. A bottom section of the sealing installation groove 3701 and a bottom section of the annular sealing strip 371 in the end plate mating member 370 are both located below the cooling transmission section 343, and can prevent a cooling airflow from leaking from a bottom.

A ratio of a height of the cooling transmission section 343 to a height of the fresh-keeping storage space can be set to be greater than or equal to one hundredth and less than or equal to one tenth. This helps the cooling transmission section 343 to have a good heat exchange efficiency between a cold air volume and the fresh-keeping storage space 330, thereby ensuring at least a good refrigeration efficiency for an effective storage area of the fresh-keeping storage space 330.

A ratio of a height of the cooling transmission section 343 to an air intake volume of the fresh-keeping storage container 30 can be set to be greater than or equal to one fiftieth and less than or equal to two fifths, a unit of the height of the cooling transmission section 343 is meters, and a unit of the air intake volume is cubic meters/minute. A set range of the air intake volume of the fresh-keeping storage container 30 is greater than or equal to 0.02 cubic meters/minute and less than or equal to 0.5 cubic meters/minute. A height of a cooling transmission air section 343 is greater than or equal to 5 millimeters and less than or equal to 20 millimeters. Illustratively, the height of the cooling transmission section 343 is 0.005 meters, the air intake volume is 0.25 cubic meters per minute, and the ratio is 1/50. Alternatively, the height of the cooling transmission section 343 is 0.01 meters, the air intake volume is 0.5 cubic meters per minute, and the ratio is 1/50. Alternatively, the height of the cooling transmission section 343 is 0.008 meters, the air intake volume is 0.02 cubic meters per minute, and the ratio is 2/5. Alternatively, the height of the cooling transmission section 343 is 0.02 meters, the air intake volume is 0.05 cubic meters per minute, and the ratio is 2/5. Alternatively, the height of the cooling transmission section 343 is 0.01 meters, the air intake volume is 0.4 cubic meters per minute, and the ratio is 1/40. Alternatively, the height of the cooling transmission section 343 is 0.015 meters, the air intake volume is 0.3 cubic meters per minute, and the ratio is 1/20.

A space of the cooling transmission section 343 cooperates with the air intake volume, enabling the cooling transmission section 343 to provide a sufficient flow space for a cold air, and helping to ensure a smooth flow of the cold air in the cooling transmission section 343.

A set range of the air intake volume of the fresh-keeping storage container 30 is greater than or equal to 0.2 cubic meters/minute and less than or equal to 0.5 cubic meters/minute.

For example, it can be 0.1 cubic meters per minute, 0.15 cubic meters per minute, 0.2 cubic meters per minute, 0.25 cubic meters per minute, 0.35 cubic meters per minute, 0.45 cubic meters per minute, 0.5 cubic meters per minute, etc. The setting of the above air intake volume effectively ensures that the fresh-keeping storage container 30 has sufficient air intake, thereby guaranteeing the refrigeration efficiency of the fresh-keeping storage space 330.

A gap between a drawer bottom plate 323 and the container body bottom wall 312 on one hand provides a sliding space during a sliding of the drawer 320, and on the other hand serves as the cooling transmission section 343 of a surrounding air duct when the drawer 320 is located inside the container body for a storage. The cooling transmission section 343 is located below an entire drawer bottom plate 323, and its height is set according to a capacity of the fresh-keeping storage space 330 and a refrigeration requirement. In some embodiments, a height of the cooling transmission section 343 can be set to 5% to 12% of a height of the fresh-keeping storage space 330, for example, 5%, 8%, 12%, etc., and particularly can be set to 8%, thereby satisfying a refrigeration requirement of the fresh-keeping storage space 330 while reducing an occupation of a longitudinal space of the fresh-keeping storage container 30 by the cooling transmission section 343.

An airflow at a rear end of the cooling transmission section 343 enters a gap between the drawer rear plate 322 and the container body rear wall 313, and the gap can serve as an intra-container return air section 344 (also can be referred to as a rear wall air passage section). The inner container body return air inlet 346 is formed in a middle portion of the container body rear wall 313, and an inter-container return air section 345 is formed in the container body rear wall from the inner container body return air inlet 346 to the container body return air inlet 317. An airflow finally reaches the container body return air inlet 317 from the inner container body return air inlet 346 via the inter-container return air section 345.

The inner container body return air inlet 346 can be configured to form a preset pattern. For example, a number of diamond-shaped holes are arranged into an aesthetically pleasing figure. On the one hand, this can prevent stored items from entering the inter-container return air section 345; on the other hand, it can provide users with a good visual effect after the drawer 320 is pulled out. An opening area of the inner container body return air inlet 346 is determined through a research and an analysis of a magnitude of a return air volume, and in some embodiments, the opening area of the inner container body return air inlet 346 can be set to 10% to 30% of an inner container body rear wall, for example, 10%, 20%, 30%, and particularly 18%.

The inner container body 318 is provided with a shielding strip 3461 on two sides of the inner container body return air inlet 346, and an insulation layer 3131 between an inner container body rear wall and the container outer shell forms an inter-container return air section 345 in a region between the inner container body return air inlet 346 and the shielding strip. A cooling airflow returns from the inner container body return air inlet 346 via a return air section to the container body return air inlet 317, completing a surrounding heat exchange in the entire fresh-keeping storage container 30. A position of the inner container body return air inlet 346 corresponds to the container body return air inlet 317 longitudinally, so that the inter-container return air section 345 is linear longitudinally, thereby making a structure of the inter-container return air section 345 more concise, and facilitating air outlet.

The inner container body return air inlet 346 is laterally located between an air inlet 316 and a left side wall of the container body 310. A ratio of a distance from a right end of the inner container body return air inlet 346 to a left side wall of the container body 310 to a lateral length of a rear side wall of the container body 310 can be set to be less than or equal to one half. In other words, taking a side wall farther from the air inlet 316 among left and right side walls of the container body 310 as a reference side wall, a ratio of a distance from an end of the inner container body return air inlet 346 away from the reference side wall to the reference side wall to a lateral length of a rear side wall of the container body 310 is less than or equal to one half.

A ratio of a longitudinal distance from a bottom end of the inner container body return air inlet 346 to a bottom end of an inner surface of a rear side wall of the container body 310 to a longitudinal length of the rear side wall of the container body 310 can be set to be greater than or equal to one quarter, on one hand making a cold air need to flow upward by a certain distance to reach the inner container body return air inlet 346, thereby enabling the cold air to diffuse more fully in the fresh-keeping storage space 330, which helps improve refrigeration efficiency and uniformity. On the other hand, it prevents the inter-container return air section 345 from being too long, thereby simplifying the structure.

A ratio of a longitudinal distance from the bottom end of the inner container body return air inlet 346 to an inner bottom surface of the drawer 320 to a depth of the drawer 320 is greater than or equal to one quarter. This helps the cold air to contact a rear plate of the drawer 320 more fully, thereby improving the wrapping degree of the cold air around the drawer 320 and further enhancing the cooling efficiency and uniformity of the effective storage area inside the drawer 320.

The area of the container body return air inlet 317 can be greater than or equal to the area of the air inlet 316, so as to make the air flow smoother.

A ratio of an area of the inner container body return air inlet 346 to a return air volume of the fresh-keeping storage container 30 can be set to be greater than or equal to one five-hundredth and less than or equal to one twentieth, a unit of the area of the inner container body return air inlet 346 is square meters, and a unit of the return air volume is cubic meters/minute. For example, it can be 1/500, 1/400, 1/300, 1/200, 1/100, 1/50, 1/30, 1/20, etc.

Illustratively, a return air volume is 0.5 cubic meters/minute, and an area of the inner container body return air inlet 346 is 0.001 square meters, and a ratio is one five-hundredth. Alternatively, the air return volume is 0.02 cubic meters per minute, the area of the inner container body return air inlet 346 is 0.001 square meters, and the ratio is 1/20. Alternatively, the air return volume is 0.4 cubic meters per minute, the area of the inner container body return air inlet 346 is 0.02 square meters, and the ratio is 1/20. Alternatively, the air return volume is 0.4 cubic meters per minute, the area of the inner container body return air inlet 346 is 0.01 square meters, and the ratio is 1/40. The above structural dimensions can make a cold air to flow more smoothly when flowing out of the fresh-keeping storage container 30 via a container body return air inlet 346, thereby avoiding turbulence of the cold air at the inner container body return air inlet 346 which affects the flow of the cold air.

A thickness of the inter-container return air section 345 can be set to be greater than or equal to 5 millimeters and less than or equal to 30 millimeters. That is, a distance between a front wall and a rear wall of the inter-container return air section 345 is greater than or equal to 5 millimeters and less than or equal to 30 millimeters. For example, it can be 5mm, 10mm, 15mm, 20mm, 25mm, 30mm, etc. By setting the thickness of the inter-container return air section 345 to be between 5mm and 30mm, the inter-container return air section 345 has sufficient space for the cold air to flow, which helps ensure the smooth flow of cold air after entering the inter-container return air section 345.

A ratio of an area of the inner container body return air inlet 346 to an area of a rear side wall of the fresh-keeping storage space 330 can be greater than or equal to one fiftieth and less than or equal to one fifth. For example, it can be 1/50, 1/40, 1/30, 1/20, 1/10, 1/5, etc. Illustratively, an area of the inner container body return air inlet 346 is 0.001 square meters, and an area of a rear side wall of the fresh-keeping storage space 330 is 0.05 square meters, and a ratio is one fiftieth. Alternatively, the area of the inner container body return air inlet 346 is 0.02 square meters, the area of the rear side wall of the fresh-keeping storage space 330 is 0.1 square meters, and the ratio is 1/5. Alternatively, the area of the inner container body return air inlet 346 is 0.002 square meters, the area of the rear side wall of the fresh-keeping storage space 330 is 0.04 square meters, and the ratio is 1/20. The above ratio parameter of areas helps a cold airflow at a rear end of the fresh-keeping storage space 330 to smoothly flow out from the inner container body return air inlet 346, effectively preventing cold air from accumulating at the rear of the fresh-keeping storage space 330, thereby avoiding uneven temperature in the fresh-keeping storage space 330 and a decrease in the fresh-keeping quality of stored items.

During an entire surrounding process, the cooling airflow does not enter an interior of the fresh-keeping storage container 30. Through an improved design of various sections of the surrounding air duct, a uniform refrigeration in the fresh-keeping storage space 330 can be ensured, and the fresh-keeping quality is improved in conjunction with the magnetic field. Through an actual testing of a trial-manufactured sample, the fresh-keeping storage container 30 and the refrigerator 10 using the solution of the present embodiment can greatly extend a fresh-keeping storage time of the stored items. For example, for fresh meat and fish, the fresh-keeping time can be extended to 5 to 7 days, which significantly improves the user experience.

The second magnetic field assembly 421 is arranged below a bottom wall of the inner container body 318, and its construction is substantially consistent with the first magnetic field assembly 411, being arranged in a mirror image relative to the fresh-keeping storage space 330. That is, the second magnetic source plate 424 is located above the second magnetic conductive plate 423, and a region where the second magnetic conductive plate 423 contacts the second magnetic source plate 424 and a surface of the second magnetic source plate 424 are also both configured to have a flatness meeting requirements, with a tolerance requirement for the flatness being as small as possible; for example, less than 0.1mm. The two can be closely attached to achieve zero-gap fit, thereby improving the uniformity of the magnetic field.

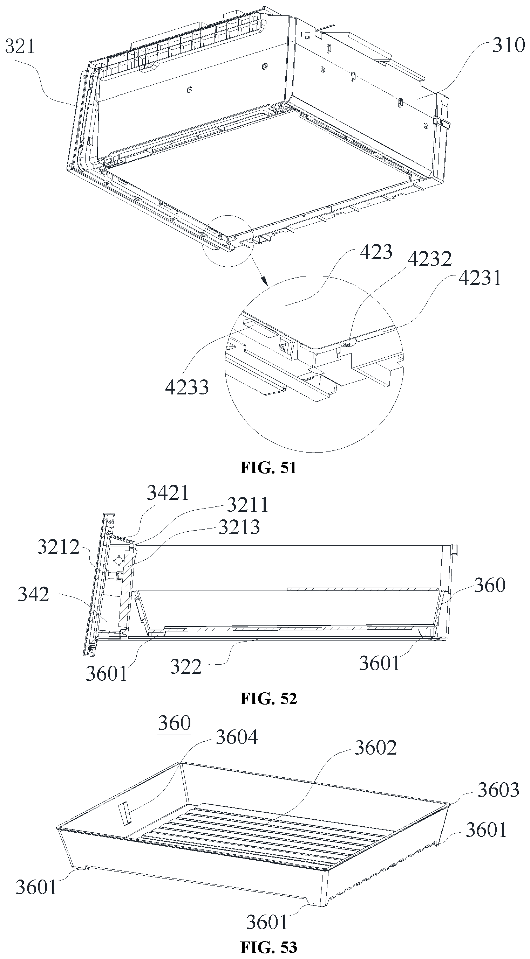

FIG. 51 is a schematic view of the bottom of the container body of the fresh-keeping storage container 30 according to an embodiment of the present application. The second magnetic conductive plate 423 extends outward around a corresponding region of the second magnetic source plate 424 to form extension portions 4231. The extension portions 4231 and a main body portion against which the first magnetic source plate 414 abuts form a stepped surface. That is, the extension portions 4231 of the second magnetic conductive plate 423 protrude upward relative to the second magnetic source plate 424 for a cooperation with the container body and/or the magnetic field connecting member 431. A protrusion height of the extension portions 4231 of the second magnetic conductive plate 423 can be greater than a thickness of the second magnetic source plate 424.

At connection positions between the second magnetic conductive plate 423 and the magnetic field connecting member 431, the extension portions 4231 can not protrude, forming a clearance notch, that is, at a position of the clearance notch, the extension portions 4231 are flush with a main body portion of a planar region of the second magnetic conductive plate 423, or have a protrusion height smaller than other positions of the extension portions 4231. The magnetic field connecting member 431 forms a flanged edge facing the second magnetic conductive plate 423 at a bottom portion, and uses the flanged edge to reliably contact a notch position of the second magnetic conductive plate 423, forming a reliable magnetic connection. The flanged edge of the magnetic field connecting members 431 can be fixed by means of screws and screw holes, etc., to ensure a firm connection. The flanged edge of the magnetic field connecting member 431 is also required to have a certain gap from a side edge of the second magnetic source plate 424, forming a magnetic gap. Using the above notch, after the magnetic field connecting member 431 is connected with the second magnetic conductive plate 423, the magnetic field connecting member 431 will not affect a connection between the second magnetic conductive plate 423 and the container body 310 in a thickness direction.

In an embodiment where a second electromagnetic coil 425 is provided, the second electromagnetic coil 425 can be respectively located at central positions of the first magnetic source plate 414 and the second magnetic source plate 424. A bottom surface of the inner container body 318 is provided with a coil accommodating groove for placing the second electromagnetic coil 425 and a cable accommodating groove for accommodating a lead cable of the second electromagnetic coil 425. The shape of the coil accommodating groove is adapted to an outer shape of the second electromagnetic coil 425, and a groove depth of the coil accommodating groove is adapted to a thickness of the second electromagnetic coil 425, thereby ensuring that the second electromagnetic coil 425 can reliably abut against the second magnetic source plate 424.

The second magnetic conductive plate 423 can be connected to the inner container body through a screw 4232 and a clip 4233, where connection positions of a screw hole and the clip 4233 are both on the extension portions 4231 of the second magnetic conductive plate 423. The above screw 4232 and clip 4233 ensure that the second magnetic conductive plate 423 can be reliably connected to the container body 310.

A thermal insulation board can be disposed below the second magnetic conductive plate 423 (the thermal insulation board is hidden in the figure to show the second magnetic conductive plate 423). The lower side of the thermal insulation board is the bottom wall of the container outer shell (which can be a partition board or liner wall in the storage compartment).

FIG. 52 is a cross-sectional view of the drawer 320 of the fresh-keeping storage container 30 according to an embodiment of the present application; FIG. 53 is a schematic view of the tray 360 in the drawer of the fresh-keeping storage container 30 according to an embodiment of the present application. Since the cooling airflow in the cooling transmission section directly contacts the drawer bottom plate 322, in order to avoid an excessively low temperature at a bottom of the drawer, the fresh-keeping storage container 30 further provides a tray 360 inside the drawer 320. The tray 360 is placed inside the drawer 320 and used for holding stored items. A plurality of supporting portions 3601 are formed on a bottom plate of the tray 360, and the supporting portions 3601 can be a supporting foot or a supporting bar and are arranged to protrude downward. The tray 360 uses the supporting portions 3601 to contact the drawer bottom plate 322, so that the bottom plate of the tray 360 has a certain gap with a bottom plate of the drawer, preventing the stored items from directly contacting the drawer bottom plate 322 and causing an excessively low temperature. The supporting portions 3601 can be provided at a position close to an edge of the tray bottom plate.

In some embodiments, the bottom plate of the tray 360 is configured as an uneven surface 3602, enabling a portion of the stored items to also have a gap with a bottom of the tray. For example, the uneven surface 3602 of the tray bottom plate can be formed by a protruding strip and a groove extending in a front-rear direction at intervals from each other.

A top of a side plate of the tray 360 can be provided with an outwardly extending flanged edge 3603. A side wall of the drawer can be provided with a protruding strip 3241 located on a lower side of the flanged edge. A height of the tray can be one third to one half of an overall height of the drawer, that is, the protruding strip 3241 is provided at a height position of one third to one half of an inner side wall of the drawer. A top surface of the flanged edge 3603 can abut against a lower surface of the protruding strip 3241, thereby preventing the stored items from falling into a gap between the tray 360 and the drawer 320, while also ensuring that the tray 360 can be placed more stably in the drawer 320. In some other embodiments, the protruding strip 3241 can be used to place a shelf (not shown), and the shelf is used to further divide the fresh-keeping storage space 330, making a placement of the stored items more convenient. The shelf itself can also be provided with magnetic source components to further improve the effective magnetic field strength of the storage space.

In some embodiments, the side plates of the tray 360 can be arranged obliquely, that is, expanding outward gradually from bottom to top. This structure can make the tray 360 have a larger opening, facilitating the taking and placing of stored items. On the other hand, the tray 360 can also have a larger gap with the drawer, thereby ensuring uniform refrigeration of the stored items.

One or more hand-grip portions 3604 can also be provided on the side walls of the tray 360 (for example, holes for fingers to insert are provided at the front wall of the tray), thereby allowing users to take the tray out of the drawer for cleaning.

Up to this point, those skilled in the art should recognize that although multiple exemplary embodiments of the present invention have been shown and described in detail herein, many other variations or modifications conforming to the principles of the present invention can still be directly determined or derived from the content disclosed in the present invention without departing from the spirit and scope of the present invention. Therefore, the scope of the present invention should be understood and deemed to cover all such other variations or modifications.

## Claims

1. A fresh-keeping storage container, comprising:
a container body, defining a fresh-keeping storage space for placing a stored item therein; and
a magnetic field device, comprising at least one magnetic field assembly and being configured to form a magnetic field in the fresh-keeping storage space.

2. The fresh-keeping storage container according to claim 1, wherein each of the at least one magnetic field assembly comprises a magnetic source plate and a magnetic conductive plate, the magnetic conductive plate comprises a planar region, the magnetic source plate abuts against the planar region, and a flatness tolerance of the planar region is less than a predetermined tolerance threshold, so that the magnetic source plate as a whole achieves a tight fitting with the magnetic conductive plate.

3. The fresh-keeping storage container according to claim 2, wherein the predetermined tolerance threshold is set to 1mm or 0.1mm or 0.05mm.

4. The fresh-keeping storage container according to claim 2, wherein the magnetic field device comprises a first magnetic field assembly and a second magnetic field assembly, and the first magnetic field assembly and the second magnetic field assembly are respectively disposed on a group of opposing side walls of the container body; and
the fresh-keeping storage container further comprises at least one magnetic field connecting member, the magnetic field connecting member comprises a main body plate and flanged edges extending from two ends of the main body plate, and the main body plate of the at least one magnetic field connecting member is respectively disposed in a side wall of the container body connected to the side walls where the first magnetic field assembly and the second magnetic field assembly are located, and is connected to the first magnetic field assembly and the second magnetic field assembly via the flanged edges.

5. The fresh-keeping storage container according to claim 4, wherein one or more fixing structures are disposed on the container body for each of the at least one magnetic field connecting member, and the magnetic field connecting member is fixed to the container body by the one or more fixing structures, thereby ensuring a reliable connection between the flanged edges of the magnetic field connecting member and the first magnetic field assembly and the second magnetic field assembly.

6. The fresh-keeping storage container according to claim 5, wherein the container body comprises:
an inner container body, wherein the inner container body defines the fresh-keeping storage space, and
the first magnetic field assembly, the second magnetic field assembly, and the magnetic field connecting member are respectively disposed on an outer side of the inner container body, and the one or more fixing structures are disposed on the inner container body.

7. The fresh-keeping storage container according to claim 6, wherein a fixing hole is formed in a middle portion of the main body plate of the at least one magnetic field connecting member, and the one or more fixing structures comprise a fixing structure for the main body plate, the fixing structure for the main body plate is disposed on the inner container body at a position corresponding to the fixing hole of the main body plate, and is connected to the fixing hole of the main body plate.

8. The fresh-keeping storage container according to claim 6, wherein the first magnetic field assembly is disposed above a top wall of the inner container body, and the second magnetic field assembly is disposed below a bottom wall of the inner container body; and
there are two magnetic field connecting members, and the main body plates of the two magnetic field connecting members are respectively disposed on outer sides of side walls at lateral sides of the inner container body, and the flanged edges are disposed at an upper end and a lower end of the main body plate, and extends toward a side edge of the first magnetic field assembly and the second magnetic field assembly.

9. The fresh-keeping storage container according to claim 6, wherein a retaining hole is formed on the flanged edge, and the one or more fixing structures further comprise a fixing structure for the flanged edge, the fixing structure for the flanged edge is disposed on a top wall and a bottom wall of the inner container body at a position corresponding to the retaining hole of the flanged edge, and is connected to the retaining hole of the flanged edge.

10. The fresh-keeping storage container according to claim 6, wherein the inner container body extends a protruding wall respectively at a top end and a bottom end of the side wall where the main body plate of the at least one magnetic field connecting member is located; and
the one or more fixing structures further comprise a through hole, the through hole is disposed on the protruding wall and is adapted to an outer shape of the flanged edge, and the flanged edge extends through the through hole to the first magnetic field assembly or the second magnetic field assembly.

11. The fresh-keeping storage container according to claim 4, wherein the magnetic conductive plate forms extension portions on two sides of the planar region; and
each of the at least one magnetic field connecting member is disposed on a side wall connected to the side walls where the first magnetic field assembly and the second magnetic field assembly are located, and is connected to the extension portion, thereby achieving a magnetic connection with the first magnetic field assembly and the second magnetic field assembly.

12. The fresh-keeping storage container according to claim 11, wherein a dimension of a contacting region between each of the at least one magnetic field connecting member and the extension portion along an extension direction of the at least one magnetic field connecting member is set to be greater than or equal to 1mm and less than or equal to 10mm.

13. The fresh-keeping storage container according to claim 12, wherein one side of the flanged edge is connected to the extension portion, and a gap exists between an end of the flanged edge and the magnetic source plate.

14. The fresh-keeping storage container according to claim 12, wherein the magnetic conductive plate extends outward around the planar region to form the extension portion; at least a partial section of the extension portion protrudes from the planar region toward a side of the magnetic source plate, so that the at least partial section of the extension portion forms a step with the planar region; and
an outer periphery of the magnetic source plate has a predetermined spacing with the step.

15. The fresh-keeping storage container according to claim 14, wherein a central section of the extension portion is flush with the planar region, thereby forming a clearance notch relative to a protruding section; and the at least one magnetic field connecting member is connected to a clearance notch section of the extension portion.

16. The fresh-keeping storage container according to claim 14, wherein a protrusion height of a protruding section of the extension portion is greater than a thickness of the magnetic source plate.

17. The fresh-keeping storage container according to claim 2, wherein the fresh-keeping storage container further comprises a drawer, the drawer is slidably disposed in the container body; and the magnetic field device comprises a first magnetic field assembly and a second magnetic field assembly disposed in opposing side walls of the container body, and the magnetic source plate in the first magnetic field assembly and the second magnetic field assembly is close to the drawer, and the magnetic conductive plate in the first magnetic field assembly and the second magnetic field assembly is located on an outer side of the magnetic source plate.

18. The fresh-keeping storage container according to claim 17, wherein the first magnetic field assembly is disposed at a top of the container body, and the second magnetic field assembly is disposed at a bottom of the container body, and
an internal air passage for a cooling airflow to pass through is disposed above the magnetic conductive plate of the first magnetic field assembly; and
the container body is provided with a protrusion on a top surface of an inner container body of the container body below the first magnetic field assembly, and the protrusion is used to support the magnetic source plate of the first magnetic field assembly, so that an air gap exists between the magnetic source plate of the first magnetic field assembly and the top surface of the inner container body.

19. The fresh-keeping storage container according to claim 4, wherein each of the at least one magnetic field assembly further comprises:
an electromagnetic coil, disposed on a side of the magnetic source plate opposite to the magnetic conductive plate, and
the magnetic source plate is a uniformly magnetized permanent magnet plate; and the magnetic field device is configured to form a magnetic field in the fresh-keeping storage space with an effective magnetic field strength range of 10-100Gs and an effective magnetic field spacing range of 60-240mm.

20. A refrigerator, comprising:
the fresh-keeping storage container according to any one of claims 1 to 9.
